(19) Europäisches Patentamt
European Patent Office
Office européen des brevets

(11) **EP 4 047 529 A1**

(12) **EUROPEAN PATENT APPLICATION**

(43) Date of publication:
**24.08.2022 Bulletin 2022/34**

(21) Application number: **21205246.8**

(22) Date of filing: **28.10.2021**

(51) International Patent Classification (IPC):
**G06N 5/00** *(2006.01)*   **G06N 7/00** *(2006.01)*

(52) Cooperative Patent Classification (CPC):
**G06N 5/003; G06N 7/005**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.02.2021 JP 2021023473**

(71) Applicant: **FUJITSU LIMITED**
**Kawasaki-shi, Kanagawa 211-8588 (JP)**

(72) Inventor: **Matsubara, Satoshi**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING SYSTEM, INFORMATION PROCESSING METHOD, AND PROGRAM OF INFORMATION PROCESSING**

(57)    A system configured to search for solutions to a problem represented by an energy function containing state variables, the system including: nodes to which each subproblem divided from the problem is separately assigned, each node being configured to: search for the solutions by updating one of the state variables belonging to a state variable group including a part of the state variables; hold the solutions found by the search; transmit one of the solutions to another node; receive another one of the solutions from the another node; and update, based on the another one of the solutions, the solutions held by the own node in accordance with a rule, wherein a part of a first state variable group assigned to a first node from among the state variables overlaps with at least a part of a second state variable group assigned to a second node from among the state variables.

FIG. 1

EP 4 047 529 A1

**Description**

FIELD

The embodiments discussed herein are related to an information processing system, an information processing method, and a program of information processing.

BACKGROUND

There is an information processing device that calculates a multivariable combinatorial optimization problem, which the von Neumann computer is not good at, by replacing the combinatorial optimization problem with an Ising model, which is a model representing the behavior of spins in a magnetic material. Approaches to solve the problem replaced by the Ising model in a practical time include various search algorithms such as simulated annealing (SA) and simulated quantum annealing (SQA). The combinatorial optimization problem is formulated with an energy function containing a plurality of state variables. The energy function is sometimes called an objective function or an evaluation function or the like. The information processing device uses the search algorithms to search for the ground state of the Ising model that minimizes the value of the energy function. The ground state corresponds to an optimum solution of the combinatorial optimization problem.

Here, there is a case where the problem is divided into a plurality of subproblems according to the number of state variables handled in the problem represented by the energy function, which is the scale of the problem, and solved.

For example, an optimization problem calculation system that divides a combinatorial optimization problem into a plurality of subproblems and causes Ising machines to individually solve each of the plurality of subproblems has been proposed. The proposed optimization problem calculation system receives each of solutions to the plurality of subproblems from the Ising machines and calculates the solution of the whole combinatorial optimization problem based on each of the solutions to the plurality of subproblems.

Furthermore, there is also a proposal of a method in which a solution space related to the combinatorial optimization problem is divided into a plurality of cells, each of which is a subset of the solution space, and processing threads launched in each cell are executed partially in parallel.

Examples of the related art include as follows: Japanese Laid-open Patent Publication No. 2020-4387; and U.S. Patent Application Publication No. 2016/0335568.

SUMMARY

TECHNICAL PROBLEM

When a problem is divided into a plurality of subproblems and solved, the plurality of subproblems and state variable groups corresponding to each of the subproblems are assigned to nodes. Each node searches for a solution by fixing the value of a state variable that does not belong to the state variable group assigned to the own node and updating a state variable that belongs to the state variable group assigned to the own node. In each node, since the state variable that does not belong to the state variable group assigned to the own node is updated according to solution sharing through communication with other nodes, the update frequency is low. Therefore, if the state transition is no longer allowed to be performed only by the update in the state variable group assigned to the own node, it is supposed to wait for the update of the value of a state variable whose value is fixed, which does not belong to the state variable group, and the solution speed decreases.

In one aspect, the present embodiments aim to provide an information processing system, an information processing method, and a program that promote the improvement of solution performance.

SOLUTION TO PROBLEM

According to an aspect of the embodiments, there is provided an information processing system configured to search for solutions to a problem represented by an energy function that contains a plurality of state variables. In an example, the information processing system includes: a plurality of nodes to which a plurality of subproblems generated by dividing the problem is separately assigned, each of the plurality of nodes being configured to: search for one of the solutions by updating a value of one of the state variables that belongs to a state variable group assigned in correspondence with one of the subproblems assigned to an own node, the state variable group being a group that includes partial state variables of the plurality of state variables; hold a plurality of the solutions found by the search; transmit at least one of the solutions among the plurality of the solutions held by the own node to another node; receive another one of the solutions transmitted by the another node; and update, based on the another one of the solutions received from the another node, at least a part of the plurality of the solutions held by the own node in accordance with a solution update rule of the own node, wherein a part of a first state variable group overlaps with at least a part of a second state variable group, the first state variable group being a group assigned to a first node among the plurality of nodes from among the plurality of state variables, the second state variable group being a group assigned to a second node among the plurality of nodes from among the plurality of state variables.

ADVANTAGEOUS EFFECTS OF INVENTION

In one aspect, the improvement of solution performance may be promoted.

BRIEF DESCRIPTION OF DRAWINGS

FIG. 1 is a diagram explaining an information processing system according to a first embodiment;
FIG. 2 is a diagram illustrating an example of an information processing system according to a second embodiment;
FIG. 3 is a diagram illustrating a hardware example of a node;
FIG. 4 is a diagram illustrating a functional example of the information processing system;
FIG. 5 is a diagram illustrating an example of fixed bits in a subproblem;
FIG. 6 is a diagram illustrating an example of division patterns;
FIG. 7 is a diagram illustrating an example of weighting factors assigned to each node;
FIG. 8 is a diagram illustrating an example of information held in a solution buffer;
FIG. 9 is a flowchart illustrating an example of overall control of a search;
FIG. 10 is a flowchart illustrating a first example of solution update after a search;
FIG. 11 is a flowchart illustrating an example of solution transmission to another node;
FIG. 12 is a flowchart illustrating an example of solution reception from another node;
FIG. 13 is a flowchart illustrating an example of variable fixing at the time of a search;
FIG. 14 is a flowchart illustrating a second example of solution update after a search;
FIG. 15 is a diagram illustrating another example (part 1) of assignment of the division patterns;
FIG. 16 is a diagram illustrating another example (part 2) of assignment of the division patterns;
FIGS. 17A and 17B are diagrams illustrating an example of a decrease in solution speed;
FIG. 18 is a diagram illustrating an example of the improvement of solution performance;
FIG. 19 is a diagram illustrating another hardware example of the node; and
FIG. 20 is a diagram illustrating an example of an information processing system that uses a plurality of search approaches.

DESCRIPTION OF EMBODIMENTS

Hereinafter, the present embodiments will be described with reference to the drawings.

[First Embodiment]

A first embodiment will be described.

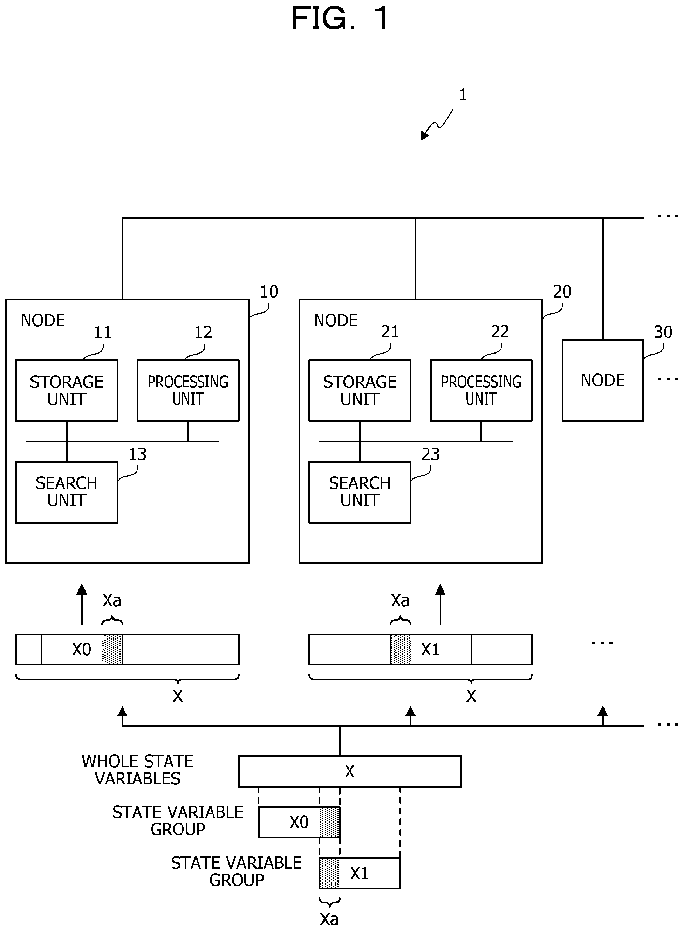

FIG. 1 is a diagram explaining an information processing system according to the first embodiment.
The information processing system 1 works out a solution to a problem represented by an energy function of the Ising model and outputs the worked-out solution. The problem represented by the energy function of the Ising model includes a combinatorial optimization problem.
The energy function contains a plurality of state variables corresponding to a plurality of spins contained in the Ising model. The state variable is a binary variable that takes a value of 1 or 0. For example, a value "-1" of the spin in the Ising model corresponds to a value "0" of the state variable. A value "+1" of the spin in the Ising model corresponds to a value "1" of the state variable. For this reason, the state variable may also be referred to as a bit that takes a value of 0 or 1. The solution is represented by the plurality of state variables. A solution represented by the whole of the plurality of state variables may also be referred to as "whole solution". The combinatorial optimization problem is converted into a problem for working out a solution that minimizes the value of the energy function. The solution that minimizes the value of the energy function correlates to the ground state of the Ising model and corresponds to an optimum solution to the combinatorial optimization problem.
The information processing system 1 includes a plurality of nodes. The information processing system 1 divides the problem represented by the energy function into a plurality of subproblems by bits and distributedly processes the plurality of subproblems with the plurality of nodes. The information processing system 1 may be achieved in one housing having a plurality of nodes connected to an internal bus, or may be achieved by a plurality of nodes connected to a network such as a local area network (LAN), a wide area network (WAN), or the Internet.

In the example in FIG. 1, the information processing system 1 includes nodes 10, 20, 30,.... Each of the nodes 10, 20, 30,... is assigned with a problem to be solved, which is a subproblem obtained by dividing the whole problem. Here, the energy of the Ising model of the whole problem is defined by, for example, an energy function E(x) in formula (1).

$$E(x) = - \sum_{\langle i,j \rangle}^{N} W_{ij} x_i x_j - \sum_{i=1}^{N} b_i x_i + c \qquad (1)$$

A state vector x has a plurality of state variables as elements and represents the state of the Ising model. In the case of a problem that maximizes the value of the energy function, the sign of the energy function is simply made opposite.

The first term on the right side of formula (1) is obtained by integrating products of values of two state variables and a weighting factor without omission and duplication for all of combinations of two state variables that can be selected from N state variables contained in the Ising model. An i-th state variable is denoted by $x_i$. A j-th state variable is denoted by $x_j$. A weighting factor indicating a weight between the i-th state variable and the j-th state variable is denoted by $W_{ij}$. The weighting factor indicates, for example, the coupling strength between two state variables. Note that $W_{ii} = 0$ is established. Furthermore, $W_{ij} = W_{ji}$ is established.

The second term on the right side of formula (1) is to work out a sum of products of each bias and the state variable value for all the state variables. A bias for the i-th state variable is indicated by $b_i$. A constant is denoted by c.

A combination of the values of the state variables that minimizes the value of the energy function in formula (1) is the optimum solution to the problem. Here, the value of the energy function is simply called energy.

Meanwhile, the energy of the Ising model for a subproblem that handles, for example, state variables with i = 1 to K (K < N), which are a part of N (N is an integer equal to or greater than two) state variables, is defined by an energy function E'(x) in following formula (2).

$$E'(x) = - \sum_{\langle i,j \rangle}^{K} W_{ij} x_i x_j - \sum_{i=1}^{K} b'_i x_i + c' \qquad (2)$$

In formula (2), $b'_i$ and c' can be represented as formulas (3) and (4), respectively.

$$b'_i = b_i + \sum_{j=K+1}^{N} W_{ij} x_j \qquad (3)$$

$$c' = c - \sum_{i=K+1}^{N} b_i x_i - \sum_{i=K+1}^{N} \sum_{j>i}^{N} W_{ij} x_i x_j \qquad (4)$$

At the time of searching for a solution to the subproblem that handles the state variables with i = 1 to K (K < N), the values of state variables with i = K + 1 to N are fixed. The second term on the right side of formula (3) represents the contribution amount of the state variables with the fixed values to the bias, and the second and third terms on the right side of formula (4) represent the contribution amount of the state variables with the fixed values to the constant.

For example, the node calculates, for each of the state variables $x_1$ to $x_K$, the amount of change in the value of the energy function E'(x) due to a change in the value of one state variable among the state variables $x_1$ to $x_K$ and stochastically accepts the amount of change in a manner of giving a priority to a change in which E'(x) becomes smaller. The amount of change in an energy $\Delta E'_i$ due to a change in $x_i$ among the state variables $x_1$ to $x_K$ can be represented as following formula (5).

$$\Delta E'_i = -\delta x_i \left( \sum_{j}^{K} W_{ij} x_j + b'_i \right) \qquad (5)$$

In formula (5), when the state variable $x_i$ changes from 1 to 0, $\delta x_i$ becomes -1, and when the state variable $x_i$ changes from 0 to 1, $\delta x_i$ becomes +1. By integrating the amount of change in the energy $\Delta E'_i$ according to the state transition with respect to the energy of a certain state, the energy of another state transitioned from the certain state can be worked out.

For example, in the SA method and the replica exchange method, a metropolis method or a Gibbs method is used to determine a transition probability of a certain Ising model from a certain state to the next state caused by updating a certain state variable. For example, the node stochastically also allows a change in which the value of the energy function E'(x) becomes greater, according to a comparison between the amount of change in the energy and a noise value. The noise value is worked out based on a temperature value or a random number. The greater the temperature value, the greater the amplitude of the noise value. The greater the amplitude of the noise value, the easier a state transition with a great amount of increase in energy is allowed.

Note that, in the above example, the subproblem that handles the state variables with i = 1 to K has been indicated. However, the energy and the amount of change in energy are similarly calculated also for the other subproblems that handle state variables in the other sections of the index i. The state variable group assigned to each node in correspondence with the subproblem is a subset of the whole X of a plurality of state variables and may have consecutive sections or inconsecutive sections of the index i. For example, regarding first and second sections that are contiguous to each other in terms of the index i, the node may work out a solution to a subproblem corresponding to a state variable group in which the first and second sections are not contiguous.

For example, the information processing system 1 may be connected to a control device (not illustrated). The control device formulates the combinatorial optimization problem with the energy function of the Ising model, based on information on the combinatorial optimization problem input by a user. The control device divides the problem represented by the energy function into a plurality of subproblems and assigns the plurality of subproblems to the nodes 10 and 20. The control device may be included in the information processing system 1. Furthermore, the function of the control device may be provided in any of the nodes 10, 20, 30,....

The node 10 includes a storage unit 11, a processing unit 12, and a search unit 13. The node 20 includes a storage unit 21, a processing unit 22, and a search unit 23. Although not illustrated, the nodes 30,... also include storage units, processing units, and search units similarly to the nodes 10 and 20. In the following, the processing units 12 and 22 and the search units 13 and 23 of the nodes 10 and 20 will be mainly described as examples, but the processing units and the search units of the nodes 30,... also execute a similar process on the subproblems assigned to the own nodes. The whole of the nodes 10, 20, 30,... covers the whole of the state variables for the problem to be solved.

The storage units 11 and 21 may be volatile storage devices such as dynamic random-access memories (DRAMs) or may be nonvolatile storage devices such as hard disk drives (HDDs) or flash memories. Each of the storage units 11 and 21 holds a solution acquired by the nodes 10 and 20, which is the whole solution. Storage areas of the storage units 11 and 21 that hold the solutions are called solution buffers.

The processing units 12 and 22 may include a central processing unit (CPU), a digital signal processor (DSP), an application specific integrated circuit (ASIC), a field programmable gate array (FPGA), and the like. The processing unit 12 may be a processor that executes a program. The "processor" may include a set of a plurality of processors (multiprocessor).

The search units 13 and 23 search for the solutions to the subproblems assigned to the own nodes. For example, the search units 13 and 23 are achieved by dedicated hardware. For example, a search circuit achieved using an integrated circuit such as an FPGA may function as the search unit 13 or 23. However, at least one of the search units of the nodes 10, 20, 30,... including the search units 13 and 23 may be achieved by the processor executing a predetermined program. For example, search approaches used in the search units of the nodes 10, 20, 30,... including the search units 13 and 23 include SA, genetic algorithm (GA), SQA, tabu search, and the like. The search approach is not limited to these approaches, and other search approaches may be employed. Furthermore, the search approaches used in the search units of the nodes 10, 20, 30,... including the search units 13 and 23 may be the same, or may be different between a certain search unit and another search unit.

Here, for a solution found by a search by a certain node, an assigned area part of the solution to which a subproblem is assigned will be considered. The assigned area part of the solution is a set of values of the state variable group corresponding to the subproblem in the solution. For example, the node 10 is assigned with a first subproblem.

A state variable group X0 corresponds to the first subproblem. This means that the assigned area part of the solution corresponding to the first subproblem is a set of values of state variables $x_m$ to $x_p$ belonging to the state variable group X0. Furthermore, the node 20 is assigned with a second subproblem. A state variable group X1 corresponds to the second subproblem. The assigned area part of the solution corresponding to the second subproblem is a set of values of state variables $x_n$ to $x_q$ belonging to the state variable group X1. Here, the magnitude relation of m, n, p, and q is m < n < p < q. This means that the state variable groups X0 and X1 overlap in a portion Xa with the index i = n to p.

Note that, although not illustrated, the search unit 13 includes a storage unit such as a static random access memory (SRAM) that holds the state variable group X0, a weighting factor between the state variables corresponding to the state variable group X0, and the like. Similarly, the search unit 23 also includes a storage unit that holds the state variable group X1, a weighting factor between the state variables corresponding to the state variable group X1, and the like. The information stored in the storage unit of each of the search units 13 and 23 is used for solution search for the subproblem by each of the search units 13 and 23.

The search for a solution by each of the search units 13 and 23 is repeatedly executed, for example, for a predetermined period, and the solution obtained by each search is output. As will be described later, solution information in each of the search units 13 and 23 is initialized by one of the whole solutions held in the solution buffer immediately before the next solution search is started. The solution information includes information regarding a state variable group whose values are to be fixed, other than the state variable group in the charge of the own node among all the state variables, and for example, is b', c', and the like in the energy function E'(x) in above formula (2). By initializing the solution information, b' and c' are reset.

The storage unit 11 stores information used for processing by the processing unit 12. The storage unit 11 stores the weighting factor. The weighting factors stored in the storage unit 11 only need to be a portion corresponding to the state variable group X0. For example, the number of weighting factors stored in the storage unit 11 only needs to be N $\times$ (p - m + 1) among N $\times$ N weighting factors. The weighting factors are used to calculate the energy for the solution and to initialize the solution information.

Furthermore, the storage unit 11 stores a solution selected based on the energy function E(x) for the whole problem represented by formula (1). A plurality of solutions is held in the storage unit 11. The number of solutions held in the storage unit 11 is a predetermined number preset in the node 10. Furthermore, the storage unit 11 holds the energy of formula (1) corresponding to the solution in association with the solution.

In this manner, the nodes 10, 20, 30,... are separately assigned with a plurality of subproblems generated by dividing the combinatorial optimization problem to be solved. Each of the nodes 10, 20, 30,... searches for the solution to the combinatorial optimization problem by updating the value of the state variable belonging to the state variable group corresponding to the subproblem assigned to the own node among the plurality of state variables. Each of the nodes 10, 20, 30,... holds a plurality of solutions including a first solution to the combinatorial optimization problem, in which the solution found by the search is reflected. The first solution may be the solution found by the search, or may be obtained by replacing a set of values of the state variable group X0 in the solution held in the storage unit 11 with the same portion of the solution found by the search. For example, the node 10 preferentially selects a predetermined number of solutions with low energy from among the first solution in which the solution found by the search at the node 10 is reflected and the plurality of solutions held in the storage unit 11 and holds the selected predetermined number of solutions in the storage unit 11.

The node 10 transmits at least one solution among the plurality of solutions held by the node 10 to the node 20 among the plurality of nodes. For example, the node 10 preferentially selects at least one solution with low energy from among the plurality of solutions held in the storage unit 11 and transmits the selected solution to the node 20. The node 10 may transmit the solution to other nodes apart from the node 20.

The node 20 updates at least a part of the plurality of solutions held by the node 20, based on the solution received from the node 10. For example, the node 20 preferentially selects a predetermined number of solutions with low energy from among the solution received from the node 10 and the plurality of solutions held in the storage unit 21 and holds the selected predetermined number of solutions in the storage unit 21.

Furthermore, a part of the state variable group X0 assigned to the node 10 overlaps with at least a part of the state variable group X1 assigned to the node 20. The overlapping portion is the above-mentioned portion Xa. Note that the whole state variable group X1 may correlate to the portion Xa of the state variable group X0.

In this manner, the good solution found by the search at the node 10 is shared with the node 20. Similarly, by transmitting the solution to the node 10 from the node 20, the good solution obtained at the node 20 may also be shared by the nodes 10 and 20. The transmission of the solution to the node 20 from the node 10 and the transmission of the solution to the node 10 from the node 20 may be performed asynchronously or synchronously.

By the above processing, each of the nodes 10, 20, 30,... updates the solution held by the own node based on the solution found by the search by the own node and updates the solution held by the own node based on the solution held by another node. Each of the nodes 10, 20, 30,... may initialize the solution information in the own node based on the solution held by the own node, which has been updated in the above manner, and search for the next solution.

For example, the processing unit 12 determines the value of the state variable other than the state variable group X0 in the next search, based on the plurality of solutions held in the storage unit 11 immediately before the next search is made after the search unit 13 obtains a certain solution and alters b' and c' in formula (2). The processing unit 22 also performs a process of determining the value of the state variable other than the state variable group X1 similarly to the processing unit 12.

Here, various methods are conceivable as a method for the processing unit 12 to determine the value of the state variable other than the state variable group X0 based on the solution held in the storage unit 11.

In one example, the processing unit 12 selects a solution with the minimum energy worked out by formula (1) from among the plurality of solutions held in the storage unit 11 and adopts the value of each state variable other than the state variable group X0 from the selected solution.

Alternatively, the processing unit 12 may randomly select one solution from among the plurality of solutions held in the storage unit 11 and adopt the value of each state variable other than the state variable group X0 from the selected solution. At this time, when three or more solutions are held in the storage unit 11, the processing unit 12 may randomly select the one solution from among k (for example, about two or three) smallest-energy solutions. Alternatively, the processing unit 12 may compare the values of respective state variables other than the state variable group X0 of each of the plurality of solutions held in the storage unit 11 to select a solution that has the largest number of state variables whose values match the values of the other solutions and adopt the values of the respective state variables from the solution.

In this manner, the processing unit 12 determines the value of each state variable other than the state variable group X0 based on the solutions held in the storage unit 11 and initializes the solution information to be set in the search unit 13. Then, the search unit 13 starts searching for the next solution for the state variable group X0, for example, with the value of each state variable contained in the selected solution as an initial state.

Similarly to the processing unit 12, the processing unit 22 also determines the value of each state variable other than the state variable group X1 based on the solutions held in the storage unit 21 and initializes the solution information to be set in the search unit 23 to cause the search unit 23 to start searching for the next solution.

The nodes 10, 20, 30,... repeatedly execute the above process and, when a predetermined time elapses, separately output the solutions held in the storage units 11 and 21 to the control device. The control device converts the solutions acquired from the nodes 10, 20, 30,... into a format of the solution to the combinatorial optimization problem and provides the solution to the user by, for example, displaying the solution on a display device or transmitting the solution to a terminal device used by the user via a network. For example, the control device may provide the user with a solution with the minimum energy acquired from one of the nodes 10, 20, 30,..., or provide the user with a plurality of solutions acquired from the nodes 10, 20, 30,....

As described above, in the information processing system 1, each of the plurality of nodes searches for a solution in which only a state variable group assigned in correspondence with a subproblem assigned to the own node, which is the state variable group that includes partial state variables of the plurality of state variables, is updated. Each of the plurality of nodes holds a plurality of solutions found by the search. Each of the plurality of nodes transmits at least one solution among the plurality of solutions held by the own node to another node and receives a solution transmitted by another node. Each of the plurality of nodes updates at least a part of the plurality of solutions held by the own node, for example, in accordance with a solution update rule of the own node that preferentially keeps a solution with low energy, based on the solution received from the another node. A part of a first state variable group assigned to a first node from among the plurality of state variables and at least a part of a second state variable group assigned to a second node from among the plurality of state variables overlap.

In this manner, by sharing the good solution detected at a certain node with other nodes, the solution may be jointly enhanced by the plurality of nodes. At this time, it is also conceivable to generate subproblems such that the state variable groups assigned to respective nodes do not overlap.

However, in each node, since the state variable that does not belong to the state variable group assigned to the own node is updated according to solution sharing through communication with other nodes, the update frequency is low. Therefore, if the state transition is no longer allowed to be performed only by the update in the state variable group assigned to the own node, it is supposed to wait for the update of the value of a state variable whose value is fixed, which does not belong to the state variable group, and the solution speed decreases.

Thus, by expanding the assigned range of the state variable group that is not fixed in at least one node, the dependence on a state variable whose value is fixed is reduced, and the improvement of solution performance may be promoted. For example, the time to reach a solution with low energy may be shortened.

[Second Embodiment]

Next, a second embodiment will be described.

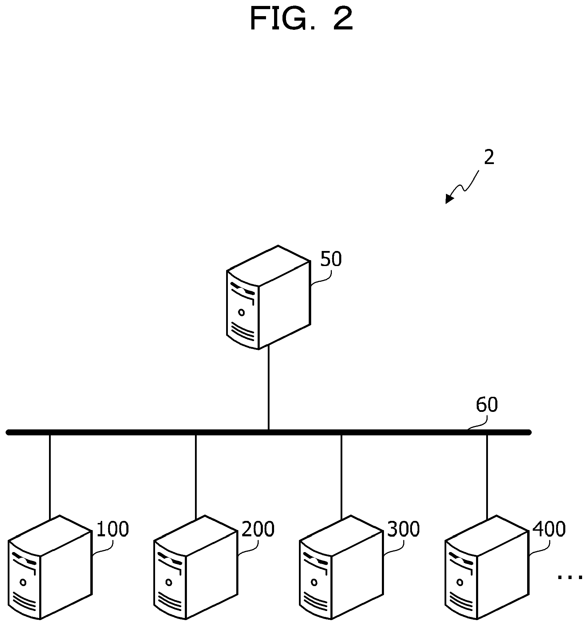

FIG. 2 is a diagram illustrating an example of an information processing system according to the second embodiment.

The information processing system 2 includes a control device 50 and nodes 100, 200, 300, 400,.... The control device 50 and the nodes 100, 200,... are connected to a network 60. The network 60 may be a LAN, a WAN, the Internet, or the like.

The control device 50 accepts input of problem data of the combinatorial optimization problem from the user. Based on the problem data, the control device 50 performs conversion to the problem represented by the energy function of the Ising model. The problem is given as a problem for minimizing the energy function of the Ising model. The energy function may include a cost term that represents a cost desired to be minimized and a penalty term that represents a constraint. The energy function for the whole problem is formulated by formula (1). Formula (1) is an energy function formulated in the quadratic unconstrained binary optimization (QUBO) format. In formula (1), $W_{ij}$, $b_i$, and c are calculated at the time of formulation.

The control device 50 divides the problem represented by the energy function of the Ising model into a plurality of subproblems and assigns the plurality of subproblems to the nodes 100, 200,.... After the information processing system 2 searches for a solution for a predetermined time, the control device 50 acquires solutions held by the nodes 100, 200,..., and converts the acquired solutions into a format of the solution to the combinatorial optimization problem to provide the solution to the user. For example, the control device 50 may be achieved by an information processing device such as a server computer.

The nodes 100, 200,... each search for the solution to the subproblem assigned to the own node. The nodes 100, 200,... include accelerators that execute searches for solutions. The accelerator is hardware that works out a solution that minimizes the value of the energy function. However, the solution search function provided by at least one of the nodes 100, 200,... may be implemented by software. For example, the nodes 100, 200,... may be achieved by information processing devices such as computers.

The respective accelerators of the nodes 100, 200,... may use search approaches, which are search algorithms, different from each other to search for solutions, or at least two of the accelerators may use the same search approach to search for solutions. For example, the search approaches include SA, GA, SQA, tabu search, and the like.

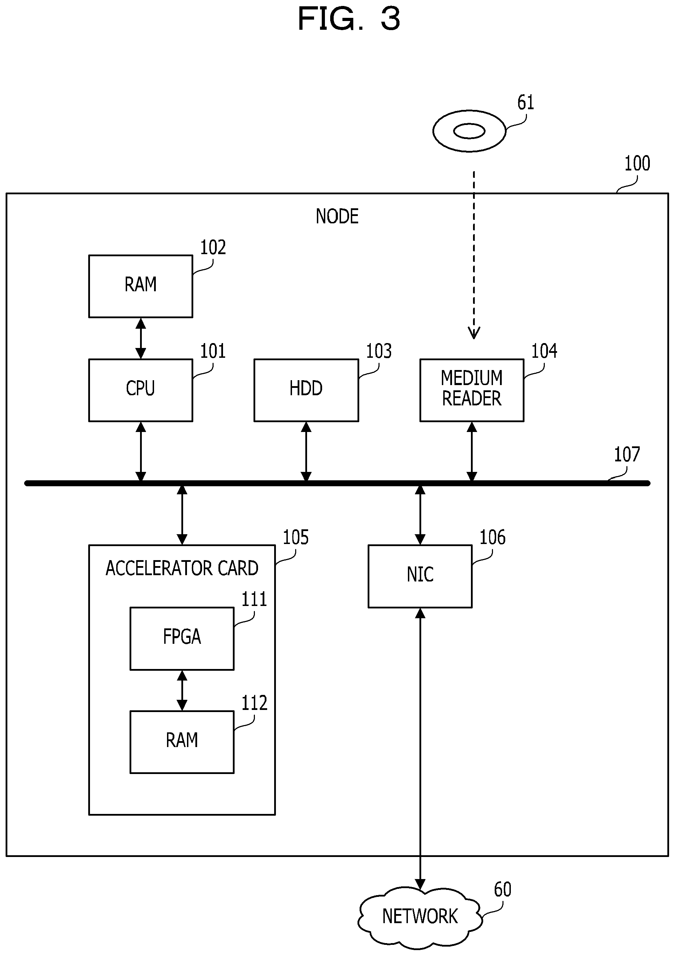

FIG. 3 is a diagram illustrating a hardware example of the node.

The node 100 includes a CPU 101, a random-access memory (RAM) 102, an HDD 103, a medium reader 104, an accelerator card 105, a network interface card (NIC) 106, and a bus 107. The CPU 101 is an example of the processing units 12 and 22 of the first embodiment. The RAM 102 is an example of the storage units 11 and 21 of the first embodiment. The accelerator card 105 achieves the function of a search unit that searches for a solution to a subproblem obtained by dividing the combinatorial optimization problem, as will be described later. The accelerator card 105 is an example of the search units 13 and 23 of the first embodiment.

The CPU 101 is a processor that executes a program command. The CPU 101 loads at least a part of the program and data stored in the HDD 103 into the RAM 102 and executes the program. Note that the CPU 101 may include a plurality of processor cores. Furthermore, the node 100 may include a plurality of processors. The process described below may be executed in parallel using a plurality of processors or processor cores. Furthermore, a set of a plurality of processors is sometimes referred to as "multiprocessor" or simply "processor".

The RAM 102 is a volatile semiconductor memory that temporarily stores the program executed by the CPU 101 and data used by the CPU 101 for arithmetic operations. Note that the node 100 may include any type of memory other than the RAM or may include a plurality of memories.

The HDD 103 is a nonvolatile storage device that stores programs of software such as an operating system (OS), middleware, and application software, and data. Note that the node 100 may include another type of storage device such as a flash memory or a solid state drive (SSD) and may include a plurality of nonvolatile storage devices.

The medium reader 104 is a reading device that reads the program and data recorded on a recording medium 61. As the recording medium 61, for example, a magnetic disk, an optical disk, a magneto-optical (MO) disk, a semiconductor memory, or the like can be used. The magnetic disk includes a flexible disk (FD) and an HDD. The optical disk includes a compact disc (CD) and a digital versatile disc (DVD).

The medium reader 104 copies, for example, the program and data read from the recording medium 61 to another recording medium such as the RAM 102 or the HDD 103. The read program is executed by the CPU 101, for example. Note that the recording medium 61 may be a portable recording medium and is sometimes used for distribution of the program and data. Furthermore, the recording medium 61 and the HDD 103 may be sometimes referred to as computer-readable recording media.

The accelerator card 105 is a hardware accelerator that searches for a solution to a problem represented by the energy function of the Ising model. The accelerator card 105 includes an FPGA 111 and a RAM 112. The FPGA 111 achieves the search function in the accelerator card 105. Furthermore, the search function may be achieved by another type of integrated circuit such as a graphics processing unit (GPU) or an ASIC. The RAM 112 holds data used for the search in the FPGA 111 and the solution to the subproblem found by the search in the FPGA 111.

A hardware accelerator that searches for a solution to the problem in the Ising format, such as the accelerator card 105, is sometimes referred to as an Ising machine, a Boltzmann machine, or the like. As will be described later, the node 100 may include a plurality of accelerator cards.

The NIC 106 is a communication interface that is connected to the network 60 and communicates with the control device 50 and the nodes 200, 300, and 400 via the network 60. The NIC 106 is connected to a communication device such as a switch or a router by a cable, for example.

The bus 107 is an internal bus of the node 100. The CPU 101, the RAM 102, the HDD 103, the medium reader 104, the accelerator card 105, and the NIC 106 are connected to the bus 107. A peripheral component interconnect express (PCIe) bus is used for the bus 107, for example.

Note that the nodes 200, 300, and 400 are also achieved by hardware similar to the hardware of the node 100. The control device 50 is also achieved by hardware similar to the hardware of the node 100. However, the control device 50 does not have to include hardware correlating to the accelerator card 105.

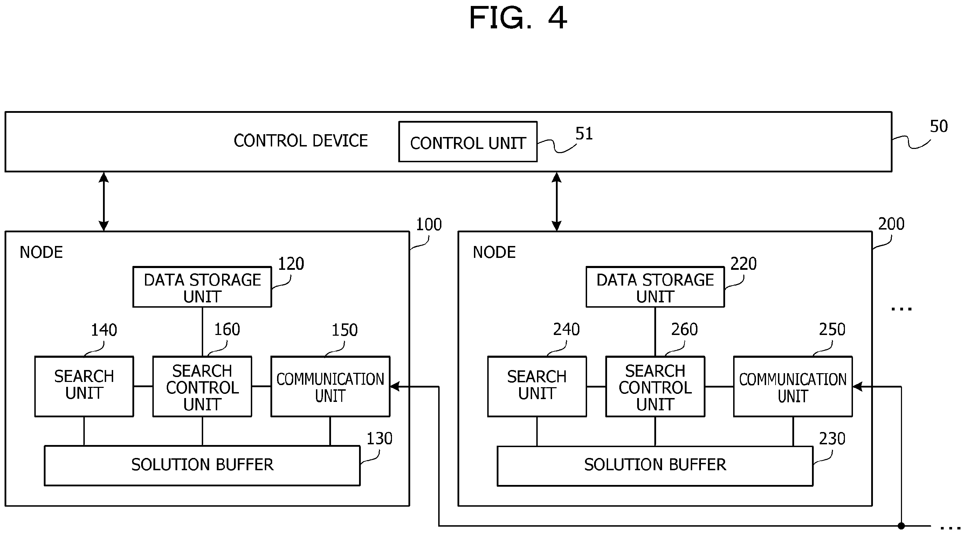

FIG. 4 is a diagram illustrating a functional example of the information processing system.

The control device 50 includes a control unit 51. The control unit 51 is achieved, for example, by a CPU of the control device 50 executing a program stored in a RAM of the control device 50.

The control unit 51 accepts input of the problem data of the combinatorial optimization problem to convert the problem data into the Ising format, divide the problem converted into the Ising format into a plurality of subproblems, and assign the plurality of subproblems to the nodes 100, 200,.... However, the control unit 51 may accept input of information on the plurality of subproblems from the outside to assign the plurality of subproblems to the nodes 100, 200,....

Furthermore, the control unit 51 acquires solutions from the nodes 100, 200,... and provides the user with the solution to the combinatorial optimization problem based on the acquired solutions.

Here, the functions of the respective nodes will be described below by exemplifying the nodes 100 and 200, but each of the nodes 300, 400,... has a function similar to the functions of the nodes 100 and 200.

The nodes 100 and 200 have data storage units 120 and 220, solution buffers 130 and 230, search units 140 and 240, communication units 150 and 250, and search control units 160 and 260, respectively.

Storage areas of the RAMs (for example, the RAM 102) of the nodes 100 and 200 are used for the data storage units 120 and 220 and the solution buffers 130 and 230, respectively. The search units 140 and 240 are achieved by the accelerator cards of the nodes 100 and 200, respectively. The communication units 150 and 250 and the search control units 160 and 260 are achieved by the CPUs of the nodes 100 and 200 executing programs stored in the RAMs of the nodes, respectively.

In the following, the functions of the node 100 will be mainly described, but functions with the same names in the nodes 200, 300, 400,... are explained similarly.

The data storage unit 120 stores data used for processing of the search control unit 160. For example, the data storage unit 120 stores the weighting factor between the state variables having a relation with the state variable group in the charge of the node 100. When the number of state variables belonging to the state variable group in the charge of the node 100 is K, the number of weighting factors held by the data storage unit 120 is given as $K \times N$.

The solution buffer 130 holds the solution obtained at the node 100. The solution buffer 130 holds the solution to the whole problem, which is the whole solution. The solution held in the solution buffer 130 is updated based on the solution found by the search at the search unit 140 and the solution received from another node.

The search unit 140 searches for a solution to a subproblem assigned to the node 100.

The search unit 140 searches for the solution to the subproblem using any of the above-mentioned search approaches such as SA, GA, SQA, and tabu search. Here, as an example, a case of using SA or the replica exchange method will be considered.

The search unit 140 calculates, for each state variable in the charge of the own node, the amount of change in the value of the energy function E'(x) due to a change in the value of one state variable in the state variable group in the charge of the own node and stochastically accepts the amount of change in a manner of giving a priority to a change in which E'(x) becomes smaller. However, the search unit 140 fixes the value of the state variable belonging to the state variable group in the charge of a node other than the own node. The amount of change $\Delta E'_i$ in the value of the energy function E'(x) is represented by formula (5) described above.

Furthermore, in the SA method and the replica exchange method, a metropolis method or a Gibbs method is used to determine a transition probability of a certain Ising model from a certain state to the next state caused by updating a certain state variable. For example, the search unit 140 stochastically also allows a change in which the value of the energy function E'(x) becomes greater, according to a comparison between the amount of change in the energy and a noise value. The noise value is worked out based on a temperature value or a random number. The greater the temperature value, the greater the amplitude of the noise value. The greater the amplitude of the noise value, the easier a state transition with a great amount of increase in energy is allowed.

The search unit 140 repeats such a process until a search end condition for one search for the solution is satisfied and takes a set of the value of each state variable in the charge of the own node and the fixed value of the state variable when the search end condition is satisfied, as the solution this time. For example, the search end condition is verified according to whether or not a predetermined unit time has elapsed, or whether or not the number of trials for the change in the state variable has reached a predetermined unit number of times, or the like.

Note that, although not illustrated, the search unit 140 includes a local memory that holds the value of each state variable in the charge of the own node and the weighting factor having a relation with each state variable. A storage area of an SRAM mounted on the accelerator card 105, or the like is used for the local memory. For example, the RAM 112 may be an SRAM that provides the local memory.

The communication unit 150 transmits the solution held in the solution buffer 130 to another node and receives the solution from another node.

The search control unit 160 controls the search unit 140 and the communication unit 150. The search control unit 160 can operate the search unit 140 and the communication unit 150 asynchronously. The search control unit 160 updates the solution held in the solution buffer 130 based on the solution acquired by the search unit 140. Furthermore, the search control unit 160 instructs the communication unit 150 to transmit the solution held in the solution buffer 130. The search control unit 160 updates the solution held in the solution buffer 130 based on the solution received by the communication unit 150 from another node. Moreover, the search control unit 160 initializes the solution information in the search unit 140 based on the solution held in the solution buffer 130.

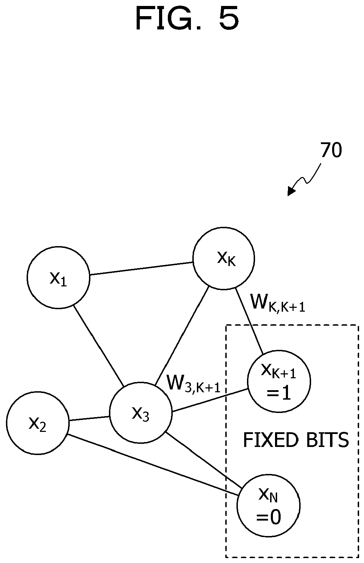

FIG. 5 is a diagram illustrating an example of fixed bits in a subproblem.

A graph 70 illustrates an example of a mutual relationship between state variables $x_1$, $x_2$, $x_3$, $x_K$, $x_{K+1}$, and $x_N$. For example, the state variables $x_K$ belong to the state variable group in the charge of the node 100. In the node 100, $x_{K+1}$ included in the state variable group in the charge of a node other than the node 100 and $x_N$ included in the state variable group in the charge of a node other than the node 100 are treated as fixed bits. In the example of the graph 70, $x_{K+1} = 1$ and $x_N = 0$ are established.

The search control unit 160 can specify the bias $b'_i$ by formula (3) using the value of the fixed bit and the weighting factor between the state variable included in the state variable group in the charge of the search unit 140 and the fixed bit. For example, a weighting factor $W_{K,K+1}$ between $x_K$ and $x_{K+1}$ is used to calculate $b'_K$, and a weighting factor $W_{3,K+1}$ between $x_3$ and $x_{K+1}$ is used to calculate $b'_3$.

Here, the state variable group assigned to each node is designated according to division patterns as follows.

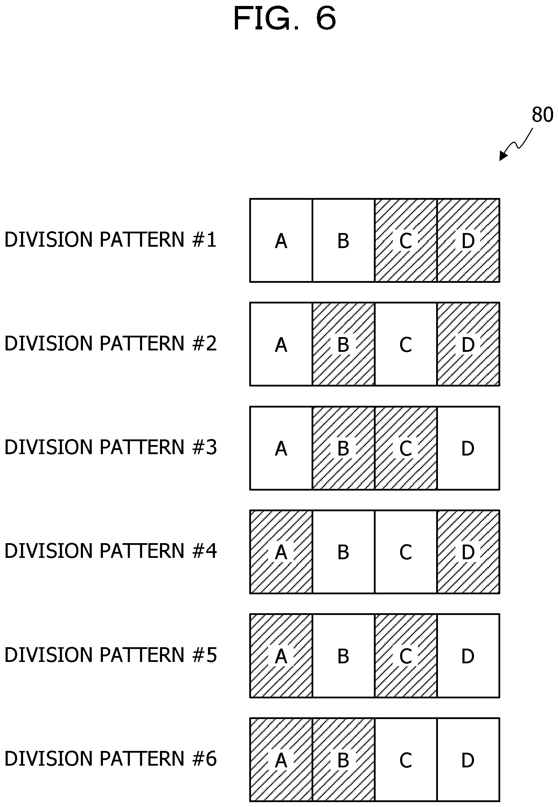

FIG. 6 is a diagram illustrating an example of the division patterns.

As an example, the scheme of division for the division patterns is determined as follows. Here, N is assumed as the number of divisions for the whole state variables. N is an integer equal to or greater than two. M is assumed as the number of areas per divided area obtained by dividing the state variables into N. M is an integer equal to or greater than two. An area that further partitions the inside of the divided area may be referred to as a subarea. For example, a pattern obtained by dividing the whole state variables into M*N areas and choosing M areas from among the divided areas is taken as one pattern, and all combinations are prepared. Note that, the size of each area may be equal or may not be equal. In one example, it is conceivable that the control device 50 assigns the division patterns obtained by the following procedure to each node.

(1) Divide the whole state variables into M*N areas.
(2) List all division patterns of choosing M areas from among M*N areas.
(3) Select (N + 1) or more division patterns from among all division patterns such that all the separate state variables are included in any one of the division patterns.

Note that the above steps (1) to (3) may be performed by the control device 50.

A division example 80 exemplifies all division patterns for the whole state variables in the case of M = 2 and N = 2. For example, after dividing the whole state variables into two, the divided portion is further partitioned into two areas. The areas partitioned in this manner are taken as areas A, B, C, and D in an order from the smallest index of the state variables. In the example of two divisions and four areas, which is the case of M = 2 and N = 2, the number of areas is 4 (= 2*2). Accordingly, the total number of division patterns is given as 6 (= $_4C_2$).

The division pattern #1 has the areas A and B. The division pattern #2 has the areas A and C. The division pattern #3 has the areas A and D. The division pattern #4 has the areas B and C. The division pattern #5 has the areas B and D. The division pattern #6 has the areas C and D.

For example, a subproblem corresponding to the division pattern #1 is assigned to the node 100. In this case, the state variable group and the weighting factor corresponding to the division pattern #1 are assigned to the node 100. Furthermore, subproblems corresponding separately to the division patterns #2, #3,... are assigned to the nodes 200, 300,..., respectively. When all six division patterns are used, the number of nodes to be used will be six.

Here, when the movement to a good solution is enabled by inverting the state variable contained in the area A and the state variable contained in the area B, since the division pattern #1 can search for the solution without being affected by fixing of the state variable, the transition is achieved with a high probability. Meanwhile, in the division patterns #2 and #3, the state variable belonging to the area A and the state variable belonging to the area B are not allowed to be transitioned at the same time because the state variable is fixed. In order to achieve the transition, it is expected to wait for the update of the value of the state variable in the fixed portion by sharing the good solution through the communication unit of each node, which takes a long time.

Similarly, when the movement to a good solution is enabled by inverting the state variable contained in the area A and the state variable contained in the area C, the transition can be made at high speed only in the division pattern #2, but it takes a long time in the other patterns. By solving while sharing the solution in all four division patterns of the set of the areas A and B, the set of the areas A and C, and the set of the areas A and D, the transition of any two state variables including the state variable in the area A is enabled without being affected by fixing of the state variables.

Moreover, by working out a solution while sharing the solution among the respective nodes using the all the division patterns #1 to #6 illustrated in the division example 80, the transition of any two state variables in all the areas is enabled without being affected by fixing of the state variables.

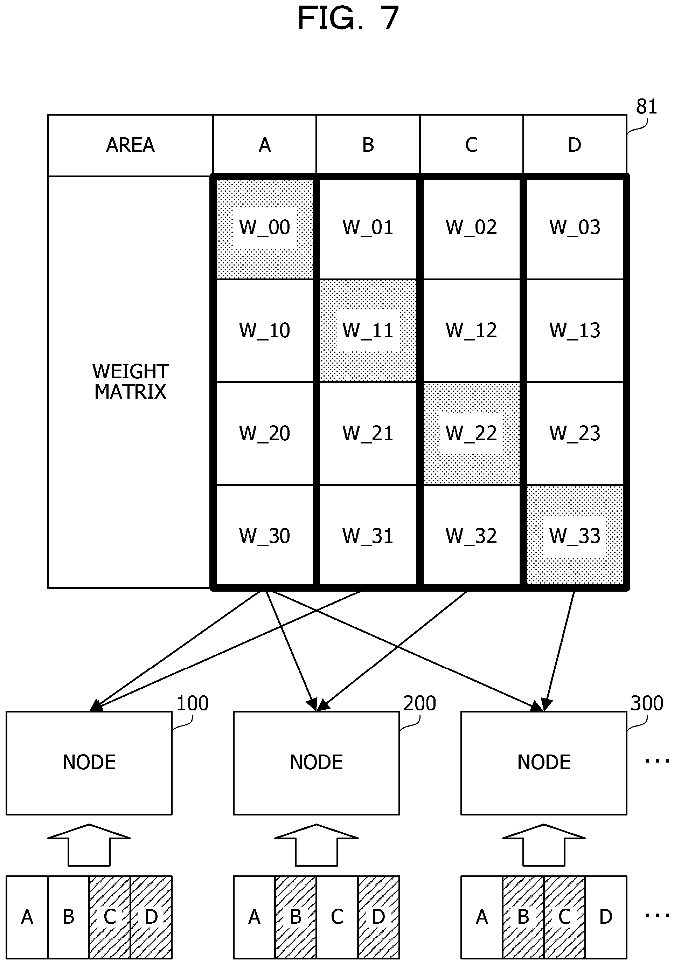

FIG. 7 is a diagram illustrating an example of the weighting factors assigned to each node.

For example, the node 100 is assigned with each state variable belonging to the areas A and B. The node 200 is assigned with each state variable belonging to the areas A and C. The node 300 is assigned with each state variable belonging to the areas A and D. The value of the state variable assigned to each node is held in the local memory in the search unit of the node.

Furthermore, each node holds a weighting factor according to the division pattern in the charge of the own node, in the local memory. A table 81 exemplifies portions of the whole weight matrix W corresponding to each of the areas A, B, C, and D. Here, the numerical value after the underscore "_" of the reference sign of the weighting factor indicates the following index ranges regarding the state variables. The index range corresponding to the area A is indicated by "0". The index range corresponding to the area B is indicated by "1". The index range corresponding to the area C is indicated by "2". The index range corresponding to the area D is indicated by "3".

A weighting factor group corresponding to the area A is a group of weighting factors W_00, W_10, W_20, and W_30. A weighting factor group corresponding to the area B is a group of weighting factors W_01, W_11, W_21, and W_31. A weighting factor group corresponding to the area C is a group of weighting factors W_02, W_12, W_22, and W_32. A weighting factor group corresponding to the area D is a group of weighting factors W_03, W_13, W_23, and W_33.

For example, the node 100 holds the group of the weighting factors W_00, W_10, W_20, and W_30 and the group of the weighting factors W_01, W_11, W_21, and W_31 corresponding to the areas A and B. Furthermore, the node 200 holds the group of the weighting factors W_00, W_10, W_20, and W_30 and the group of the weighting factors W_02, W_12, W_22, and W_32 corresponding to the areas A and C. The node 300 holds the group of the weighting factors W_00, W_10, W_20, and W_30 and the group of the weighting factors W_03, W_13, W_23, and W_33 corresponding to the areas A and D. Similarly, the other nodes in charge of the division patterns #4 to #6 also hold the weighting factor groups according to the division patterns in the charge of the own nodes.

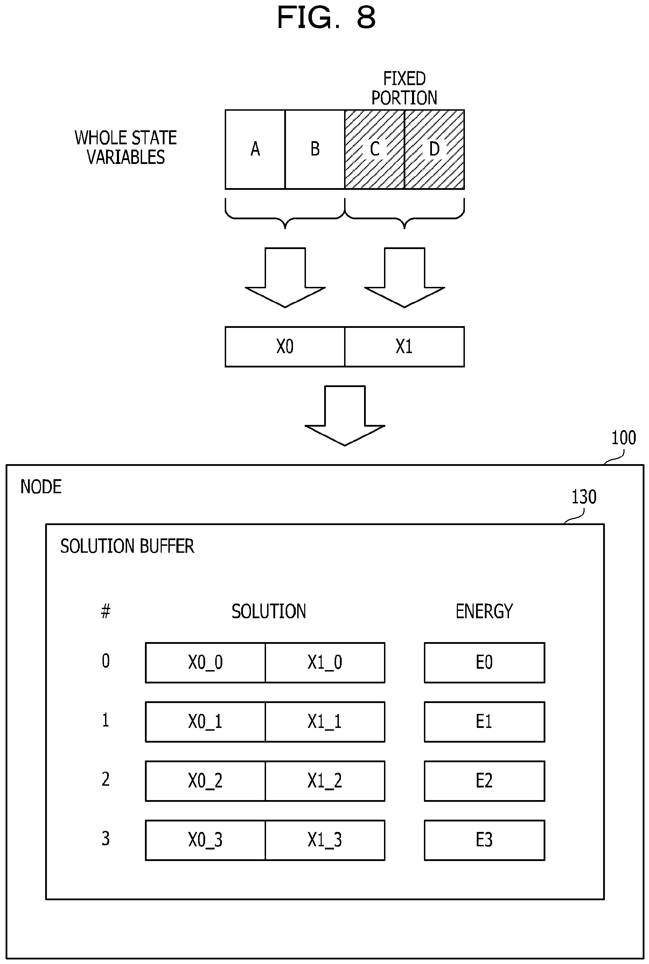

FIG. 8 is a diagram illustrating an example of information held in the solution buffer.

The node 100 is assigned with the state variable group X0 corresponding to the areas A and B from the whole state variables. Meanwhile, the state variable group X1 corresponding to the areas C and D is treated as a fixed portion in which the value is fixed.

The solution buffer 130 holds the solution and the energy. An identification number of a record containing the solution and the energy is indicated by "#" illustrated for convenience.

A record with the identification number "0" has the solution "X0_0 and X1_0" and the energy "E0". Here, a set of values of respective state variables in a certain state variable group is distinguished as, for example, "X0_0" and °X0_1" by attaching the underscore "_" and the number, such as "_1", to the reference sign representing the state variable group, such as X0.

An example in which the solution buffer 130 stores records with the identification numbers "1", "2", and "3" apart from the identification number "0" is illustrated.

The number of sets of solutions and energies stored in the solution buffer 130 is prescribed. In the example of the second embodiment, it is assumed that four sets of solutions and energies are stored in the solution buffer of each node. However, the number of sets of solutions and energies stored in each of the solution buffers of the respective nodes may be a number other than four.

When the solution found by the search at the search unit 140 is acquired for the state variable group X0, the search control unit 160 calculates the energy of a solution candidate in which the found solution is reflected in the solution held in the solution buffer 130. At this time, the data storage unit 120 holds only the weighting factor group regarding state variables that is coupled with each state variable in the state variable group X0 assigned to the node 100. Therefore, the search control unit 160 calculates the energy for when a portion of the solution held in the solution buffer 130 relevant to the state variable group X0 is altered to a new value as follows. Note that the energy can be calculated in a similar manner for another state variable group assigned to another node.

The whole state variables are assumed as Sn. The energy corresponding to Sn is assumed as En.

Furthermore, the representation Sn = Sa & So is utilized. Sa denotes a state variable group in the charge of the own node and, in the case of the node 100, correlates to the state variable group X0. So denotes a state variable group in the charge of another node and correlates to the state variable group X1 as a fixed portion for the node 100. The ampersand symbol "&" means to combine the state variable group on the left side of & and the state variable group on the right side of &.

A case of working out an updated energy E' for an energy E when the state variable group in the charge of the own node is updated from Sa to Sa' will be considered.

For example, the node 100 obtains the value of each state variable of the state variable group Sa and the energy E before update for the solution held in the solution buffer 130. Furthermore, an energy change $\Delta E(E' - E)$ for the state variable group Sa' from the state variable group Sa can be calculated at the own node. For example, the node 100 adds an additional bias $\Delta b$ calculated from So and the weighting factor held by the own node to an original bias b and then can calculate the energy change $\Delta E(E' - E)$ from the weighting factor, the bias $(b + \Delta b)$, and a change in the state variables of the own node (Sa' - Sa).

Consequently, the updated energy E' is given as $E' = E + \Delta E$ and can be calculated only by the own node.

Next, a processing procedure of the information processing system 2 will be described. First, the control device 50 assigns the subproblems to each of the nodes 100, 200,.... Then, the nodes 100, 200,... execute the process indicated below. Although the node 100 will be mainly described as an example, the nodes 200,... execute a procedure similar to the procedure of the node 100.

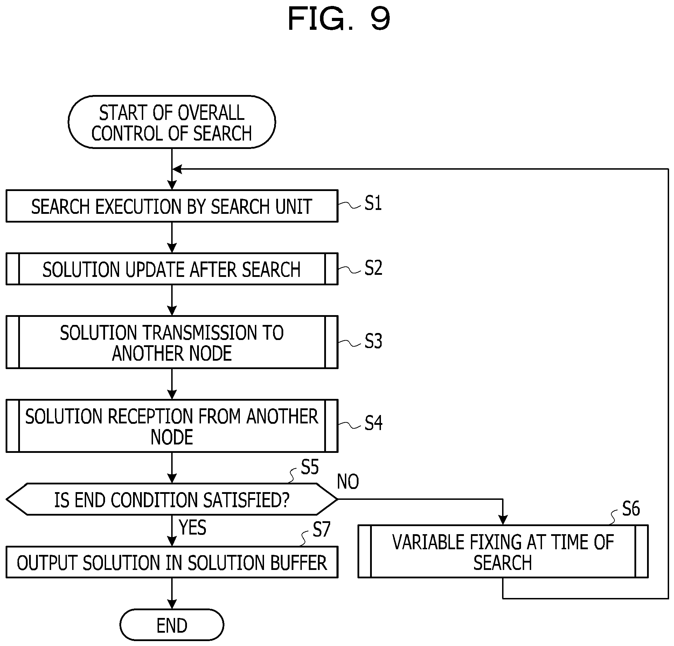

FIG. 9 is a flowchart illustrating an example of overall control of a search.

(S1) The search unit 140 executes a search for a solution to the subproblem. The search unit 140 obtains a solution by the search. The search control unit 160 acquires the solution obtained at the search unit 140. In the search, the search unit 140 updates only the value of the state variable belonging to the state variable group X0 assigned to the own node.

(S2) The search control unit 160 executes solution update after the search. The details of the process for the solution update after the search will be described later.

(S3) The search control unit 160 executes solution transmission to another node via the communication unit 150. The details of the process for the solution transmission to another node will be described later.

(S4) The search control unit 160 executes solution reception from another node via the communication unit 150. The details of the process for the solution reception from another node will be described later.

(S5) The search control unit 160 verifies whether or not an end condition for the overall control of the search is satisfied. When the end condition is not satisfied, the search control unit 160 proceeds to step S6 in the process. When the end condition is satisfied, the search control unit 160 proceeds to step S7 in the process. For example, the end condition is that a predetermined time has elapsed from the start of the process for the overall control, or that above step S1 has been executed a predetermined number of times, or the like.

(S6) The search control unit 160 executes the process for variable fixing at the time of search. The process for variable fixing at the time of search includes the initialization of the solution information. The details of the process for variable fixing at the time of search will be described later. Then, the search control unit 160 proceeds to step S1 in the process.

(S7) The search control unit 160 outputs the solution held in the solution buffer 130 to the control device 50. Then, the search control unit 160 ends the process for the overall control of the search.

Note that the solution transmission to another node in step S3 and the solution reception from another node in step S4 do not have to be executed after step S2 as described above and may be executed at any timing asynchronously with the search by the search unit 140, such as at a predetermined cycle. For example, it is conceivable that the cycle of the solution transmission to another node is made the same as the cycle in which the solution in the solution buffer 130 is updated on the basis of the solution found by the search by the search unit 140, or is made longer than the cycle. Furthermore, the solution reception from another node may be executed when the solution is transmitted as a push by another node. In this manner, the search at the own node, the solution transmission to another node, and the solution reception from another node may be executed separately as independent processes. In addition, the solution transmission to another node in step S3 and the solution reception from another node in step S4 may be executed in any order. For example, steps S3 and S4 may be executed in reverse order. Besides, one node sometimes receives the solutions from a plurality of other nodes in succession.

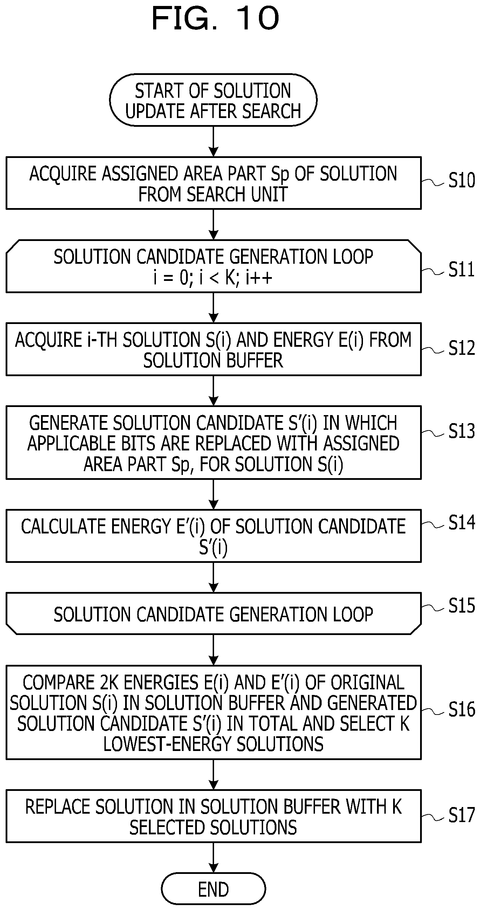

FIG. 10 is a flowchart illustrating a first example of the solution update after a search.

The process for the solution update after the search correlates to step S2.

(S10) The search control unit 160 acquires an assigned area part Sp of the solution found by the search, from the search unit 140. The assigned area part Sp is a set of values of the state variable group X0 assigned to the own node in the solution found by the search.

(S11) The search control unit 160 executes a solution candidate generation loop. In the procedure in FIG. 10, i is assumed as the number of times the loop is executed. The initial value of i is assumed as zero. Furthermore, K is assumed as the number of solutions stored in the solution buffer 130. Each time the loop is executed once, i is incremented.

While i < K is established, following steps S12 to S14 are repeatedly executed.

(S12) The search control unit 160 acquires the i-th solution S(i) and energy E(i) from the solution buffer 130.

(S13) The search control unit 160 generates a solution candidate S'(i) in which applicable bits, which are the state variable portion belonging to the state variable group X0 in the charge of the node 100, are replaced with the assigned area part Sp, for the solution S(i).

(S14) The search control unit 160 calculates an energy E'(i) of the solution candidate S'(i).

(S15) The search control unit 160 increments i each time the loop is executed once and, when i = K is reached, exits the solution candidate generation loop to proceed to step S16 in the process.

(S16) The search control unit 160 compares 2K energies E(i) and E'(i) of the original solution S(i) in the solution buffer 130 and the generated solution candidate S'(i) in total and selects K lowest-energy solutions. The K solutions to be selected may include the solution candidate S'(i).

(S17) The search control unit 160 replaces the solution in the solution buffer 130 with the K solutions selected in step S16. Then, the search control unit 160 ends the process for the solution update after the search.

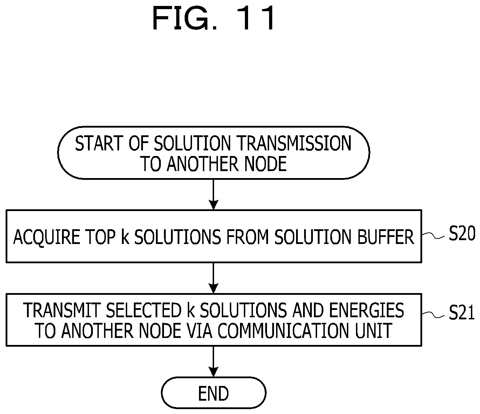

FIG. 11 is a flowchart illustrating an example of the solution transmission to another node.

The process for the solution transmission to another node correlates to step S3.

(S20) The search control unit 160 acquires top k solutions, which are k lowest-energy solutions, from the solution buffer 130. In the procedure in FIG. 11, k denotes an integer equal to or greater than one but smaller than the number of solutions held in the solution buffer 130. For example, the value of k is prescribed from among the values of about 1 to 3.

(S21) The search control unit 160 transmits the selected k solutions and energies to another node via the communication unit 150. The transmission destination of the solutions is all nodes other than the own node. Then, the search control unit 160 ends the process for the solution transmission to another node.

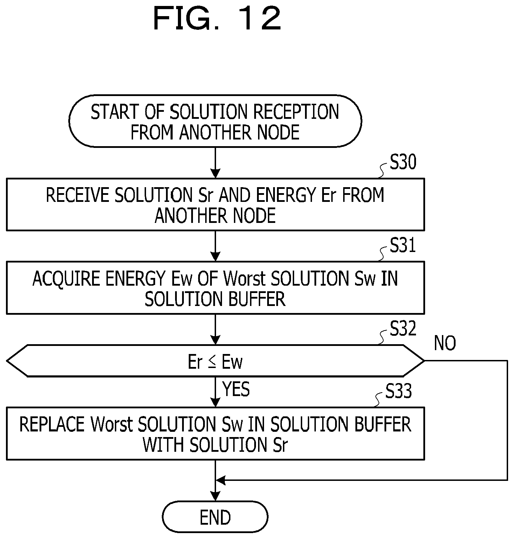

FIG. 12 is a flowchart illustrating an example of the solution reception from another node.

The process for the solution reception from another node correlates to step S4.

(S30) The communication unit 150 receives a solution Sr and an energy Er from another node. The search control unit 160 acquires the solution Sr and the energy Er received at the communication unit 150.

(S31) The search control unit 160 acquires an energy Ew of a Worst solution Sw in the solution buffer 130, which is a solution Sw with the maximum energy.

(S32) The search control unit 160 verifies whether $Er \leq Ew$ is established. When $Er \leq Ew$ is established, the search control unit 160 proceeds to step S33 in the process. When Er > Ew is established, the search control unit 160 discards the solution Sr received from another node and ends the process for the solution reception from another node.

(S33) The search control unit 160 replaces the Worst solution Sw in the solution buffer 130 with the solution Sr. The search control unit 160 discards the Worst solution Sw. Then, the search control unit 160 ends the process for the solution reception from another node.

Note that FIG. 12 illustrates an example in which one solution is received from another node. However, when a plurality of solutions is received from another node, the search control unit 160 holds a predetermined number of smallest-energy solutions in the solution buffer 130 from among the solutions in the solution buffer 130 and the received solutions.

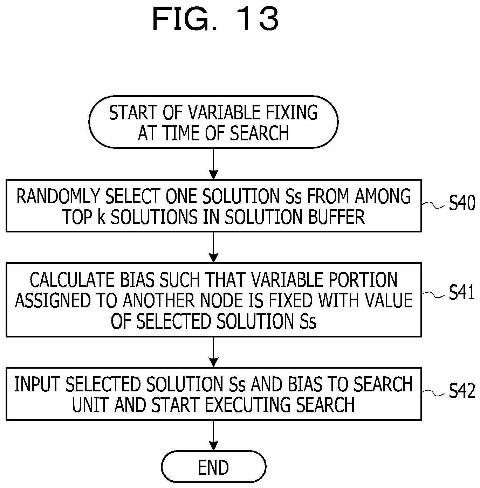

FIG. 13 is a flowchart illustrating an example of the variable fixing at the time of a search.

The process for the variable fixing at the time of a search correlates to step S6.

(S40) The search control unit 160 randomly selects one solution Ss from among top k solutions, which are k lowest-energy solutions, in the solution buffer 130. In the procedure in FIG. 13, k denotes an integer equal to or greater than one but smaller than the number of solutions held in the solution buffer 130.

(S41) The search control unit 160 calculates the bias such that the variable portion assigned to another node is fixed with the value of the selected solution Ss. The bias correlates to b' in formula (2).

(S42) The search control unit 160 inputs the selected solution Ss and the bias b' to the search unit 140 and causes the search unit 140 to execute a search. For example, as the initial state of the search by the search unit 140, the solution Ss set in the search unit 140 at the stage of step S42 may be assumed. Furthermore, the search control unit 160 may input an energy when the variable portion in the charge of another node is fixed with the selected solution Ss, to the search unit 140 and cause the search unit 140 to update the energy. Then, the search control unit 160 ends the process for the variable fixing at the time of the search.

In this manner, by evaluating the solution candidates in which solutions newly found by the search are reflected by the nodes 100, 200,... in all solutions in the solution buffer of each node, the search result is made easier to be reflected quickly in many good solutions.

Note that, in the above example, it is assumed that the solution candidate is generated by replacing the corresponding portion of the solution in the solution buffer of the own node with the own node's assigned area part of the solution found by the search at each node, and the solution in the solution buffer is replaced with the solution candidate. Meanwhile, other methods are also conceivable for updating the solution in the solution buffer.

For example, the nodes 100, 200,... may each update the solution in the solution buffer of the own node using the solution obtained by its search unit, as a solution candidate. In order to obtain the energy of the solution candidate, for example, the search control unit 160 may hold the solution and the energy of the solution used for the variable fixing at the time of the search, in the data storage unit 120. For example, the search control unit 160 compares the energy of the solution candidate with the energy of the solution held in the solution buffer 130 and, if the energy of the solution candidate is greater than the energy of the Worst solution held in the solution buffer 130, replaces the Worst solution with the solution candidate. Next, an example of the procedure for such update of the solution in the solution buffer will be described.

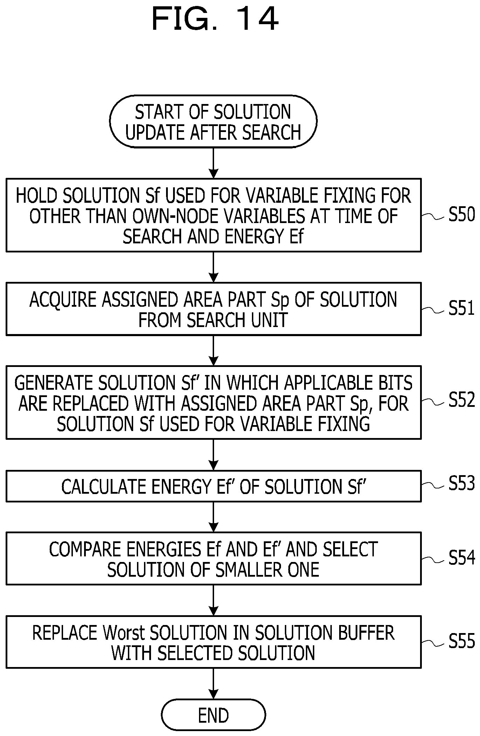

FIG. 14 is a flowchart illustrating a second example of the solution update after a search.

The process for the solution update after the search correlates to step S2. The procedure in FIG. 14 is executed instead of the procedure in FIG. 10.

(S50) The search control unit 160 holds a solution Sf used for the variable fixing for other than own-node variables at the time of a search and the energy Ef of the solution Sf, in the data storage unit 120. The own-node variable is a state variable included in the state variable group in the charge of the node 100.

(S51) The search control unit 160 acquires an assigned area part Sp of the solution found by the search, from the search unit 140.

(S52) The search control unit 160 generates a solution Sf' in which applicable bits are replaced with the assigned area part Sp, for the solution Sf used for the variable fixing.

(S53) The search control unit 160 calculates an energy Ef' of the solution Sf'.

(S54) The search control unit 160 compares the energies Ef and Ef' and selects the solution of a smaller one.

(S55) The search control unit 160 replaces the Worst solution in the solution buffer 130 with the solution selected in step S54. Then, the search control unit 160 ends the process for the solution update after the search.

Note that it is also conceivable that the search unit 140 updates the energy for the current state based on formula (5) as the value of the state variable updates. In that case, the search control unit 160 may acquire the energy Ef' from the search unit 140 in step S53. The state mentioned here denotes the state of the Ising model represented by the values of all the state variables used to express the whole problem.

In this manner, by sharing the good solution detected at a certain node with other nodes, the solution may be jointly enhanced by the plurality of nodes. At this time, it is also conceivable to generate subproblems such that the state variable groups assigned to respective nodes do not overlap.

However, in each node, since the state variable that does not belong to the state variable group assigned to the own node is updated according to solution sharing through communication with other nodes, the update frequency is low. Therefore, if the state transition is no longer allowed to be performed only by the update in the state variable group assigned to the own node, it is supposed to wait for the update of the value of a state variable whose value is fixed, which does not belong to the state variable group, and the solution speed decreases.

Thus, by expanding the assigned range of the state variable group that is not fixed in at least one node, the dependence on a state variable whose value is fixed is reduced, and the improvement of solution performance may be promoted. For example, the time to reach a solution with low energy may be shortened.

Note that other methods are also conceivable for assigning the division patterns to each node.

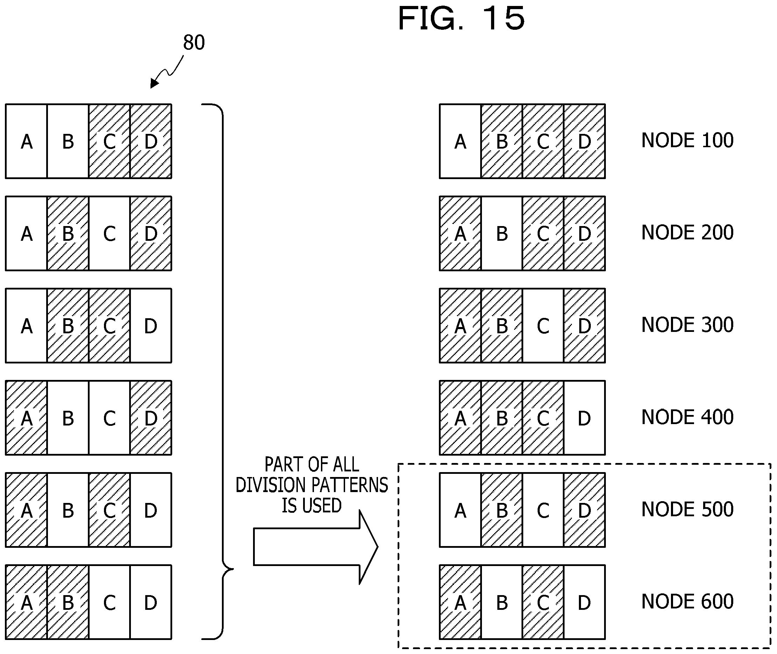

FIG. 15 is a diagram illustrating another example (part 1) of assignment of the division patterns.

For example, a part of all division patterns in the division example 80 may be used. As an example, the areas A, B, C, and D may be assigned to the nodes 100, 200, 300, and 400, respectively, a division pattern with the areas B and D may be assigned to the node 500, and a division pattern with the areas C and D may be assigned to the node 600.

In this case, a weighting factor group corresponding to the area A is assigned to the node 100. A weighting factor group corresponding to the area B is assigned to the node 200. A weighting factor group corresponding to the area C is assigned to the node 300. A weighting factor group corresponding to the area D is assigned to the node 400. A weighting factor group corresponding to the areas A and C is assigned to the node 500. A weighting factor group corresponding to the areas B and D is assigned to the node 600.

However, the assignment example in FIG. 15 is an example, and another part of all the division patterns may be used. Furthermore, assignment of the division patterns as follows is also conceivable.

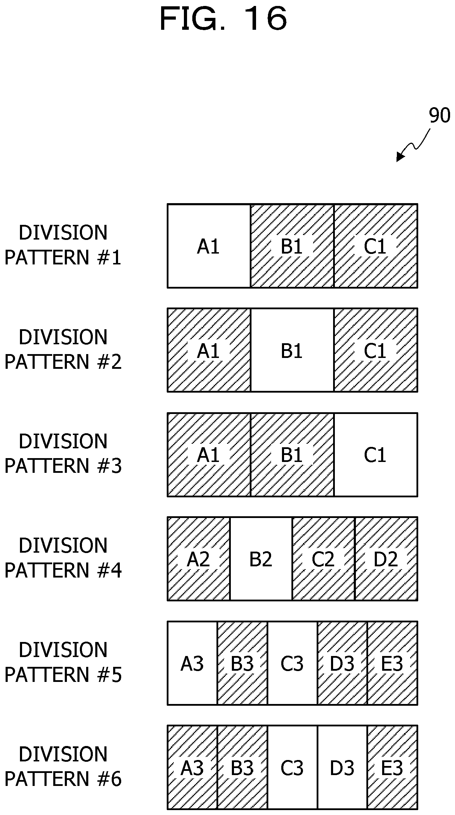

FIG. 16 is a diagram illustrating another example (part 2) of assignment of the division patterns.

In a division example 90, the whole state variables are divided into six division patterns #1 to #6 as follows. For example, areas A1, B1, and C1 are obtained by delimiting the whole state variables into three areas in an order from the smallest index. Areas A2, B2, C2, and D2 are obtained by delimiting the whole state variables into four areas in an order from the smallest index. Areas A3, B3, C3, D3, and E3 are obtained by delimiting the whole state variables into five areas in an order from the smallest index.

The division pattern #1 has the area A1. The division pattern #2 has the area B1. The division pattern #3 has the area C1. The division pattern #4 has the area B2. The division pattern #5 has the areas A3 and C3. The division pattern #6 has the areas C3 and D3. The area B2 overlaps with a part of each of the areas A1, B1 and C1. The entire area A3 overlaps with a part of the area A1. The entire area C3 overlaps with a part of the area B1. The area C3 overlaps with a part of the area B2. The area D3 overlaps with a part of each of the areas B1 and C1.

For example, it is conceivable to assign the division patterns #1 to # 6 in FIG. 16 to six nodes. Furthermore, it is also conceivable to determine the division patterns such that the number of overlaps between the respective portions of the whole state variables approaches evenness. For example, the division pattern #6 in the division example 90 may be designated so as to have the areas D3 and E3. Alternatively, the division pattern #5 in the division example 90 may be designated so as to have the areas A3 and E3.

In addition, in the division example 90, an example of using the division patterns in which the areas are delimited in three types of numbers such as three, four, and five is illustrated. However, for example, division patterns in which the areas are delimited in two types of numbers such as two and three may be used, or division patterns in which the areas are delimited in four or more types of numbers may be used.

For example, when the amount of mounted memory differs between the accelerator cards of the respective nodes, it is conceivable to use division patterns divided by different numbers of divisions. In this case, by assigning a state variable group corresponding to an area having a wide index range to a node having a large amount of mounted memory and assigning a state variable group corresponding to an area having a narrow index range to a node having a small amount of mounted memory, memory resources may be exploited efficiently.

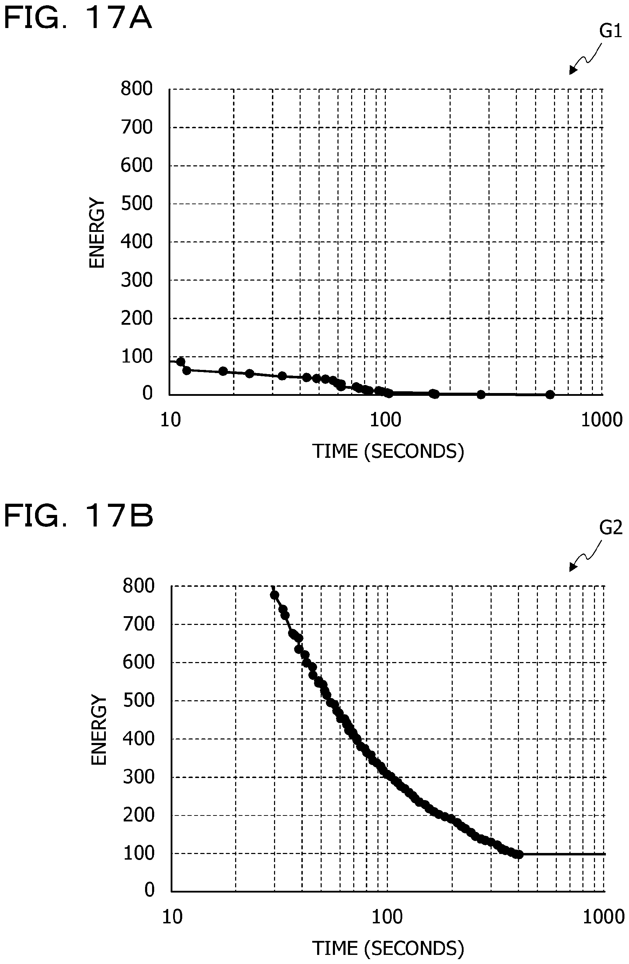

FIGS. 17A and 17B are diagrams illustrating an example of a decrease in solution speed.

FIG. 17A illustrates a graph G1. FIG. 17B illustrates a graph G2. The graphs G1 and G2 represent the influence of the lowest energy on temporal changes in the solution of the four-color problem according to whether the whole state variables are divided. The graph G1 depicts a case where the whole state variables are not divided. The graph G2 depicts a case where the whole state variables are divided into five and the respective divided areas do not overlap. The horizontal axes of the graphs G1 and G2 denote the time in units of seconds, and the vertical axes denote the energy of the solution.

Comparing the graphs G1 and G2, it can be seen that the solution progresses while the good solution can be retrieved by the search only in the area assigned to each node, but the solution speed slows down when that is no longer allowed. In the solution search by each node, a state variable outside the assigned area of the own node is fixed to the value of the initial solution, but the update frequency is low because the state variable outside the assigned area is updated only through communication between the nodes. Therefore, it is sometimes difficult to raise the quality of the solution. As a result, if the good solution is no longer allowed to be retrieved by the search in the assigned area due to the influence of fixing of the value of the state variable, a phenomenon in which the solution speed is greatly decreased occurs.

In a large-scale problem, it is difficult to work out a solution with a single node, and for this reason, a decrease in the solution speed becomes a problem in working out a solution with a plurality of nodes. Thus, in the information processing system 2, a part of the state variable group assigned to a certain node and at least a part of the state variable group assigned to another node are made to overlap.

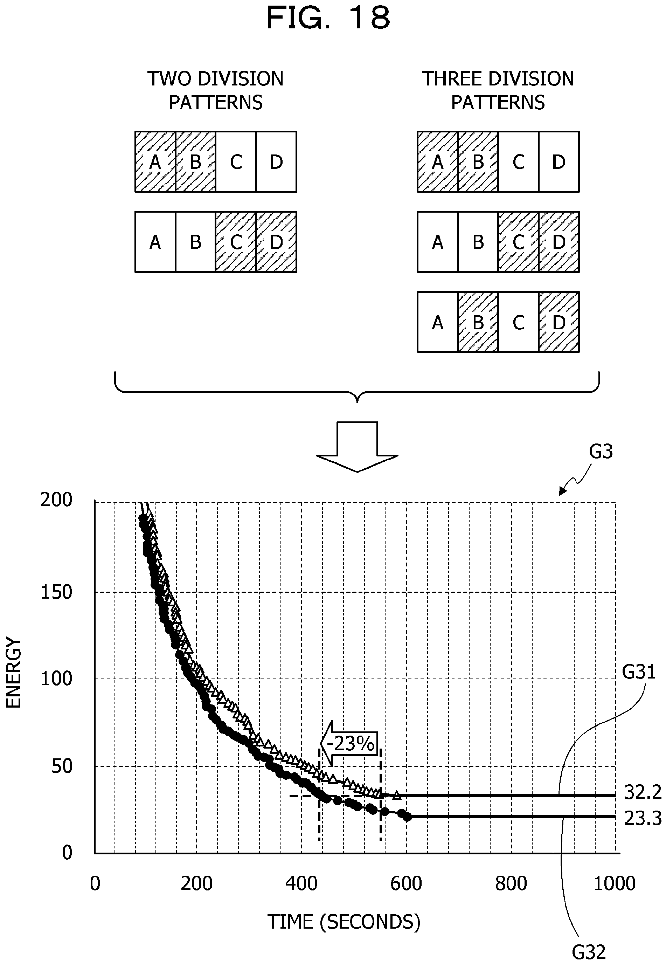

FIG. 18 is a diagram illustrating an example of the improvement of solution performance.

As exemplified in FIG. 6, there are a total of six division patterns for two divisions and four areas. We investigated a case where the number of division patterns used was increased to three in contrast to a case where the number of division patterns used was two without overlapping areas, which is the case of the normal two divisions. In the case of the normal two division, a first division pattern had the areas C and D, and a second division pattern had the areas A and B. Furthermore, in the case where the number of division patterns used was three, a first division pattern had the areas C and D, a second division pattern had the areas A and B, and a third division pattern had the areas A and C.

A graph G3 has simulation results for the solution of the four-color problem and illustrates temporal changes of the energy of the solution in the solution buffer. The horizontal axis of the graph G3 denotes the time in seconds as a unit, and the vertical axis denotes the energy of the solution. A series G31 denotes the case where the two division patterns were used. A series G32 denotes the case where the three division patterns were used.

As indicated by the series G31 and G32, by using the three division patterns and making parts of the state variable groups in the charge of the respective nodes overlap, enhancements were confirmed in terms both of the quality of the solution and the solution speed compared to the case of the normal two divisions. For example, the 10-seed average of the energy of the best solution was enhanced from 32.2 to 23.3, enhancing the quality of the solution. Furthermore, the time to reach the best solution was enhanced by approximately 23% compared to the case of the normal two divisions. For example, the time to reach the best solution was shortened. In this manner, according to the information processing system 2, the solution performance may be improved.

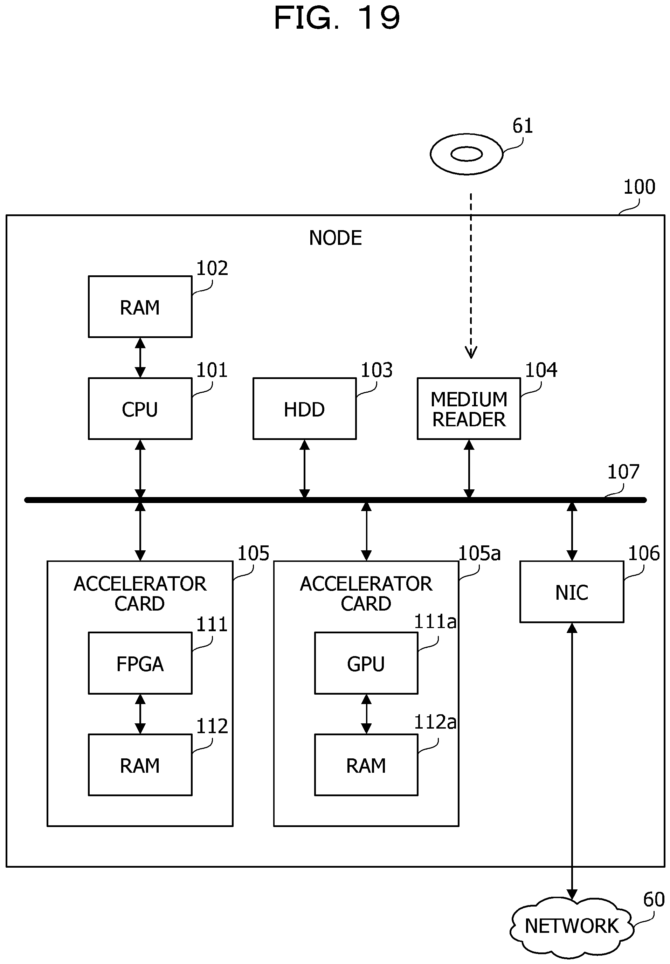

FIG. 19 is a diagram illustrating another hardware example of the node.

For example, the node 100 may further include an accelerator card 105a in addition to the hardware exemplified in FIG. 4. Similarly to the accelerator card 105, the accelerator card 105a is a hardware accelerator that searches for a solution to a problem represented by the energy function of the Ising model.

The accelerator card 105a includes a GPU 111a and a RAM 112a. The GPU 111a achieves the search function in the accelerator card 105a. The search function may be achieved by another type of integrated circuit such as an FPGA or an ASIC. The RAM 112a holds data used for the search by the GPU 111a and the solution to the subproblem found by the search by the GPU 111a.

Note that the accelerator card 105a may use the same search approach as the search approach of the accelerator card 105 or may use a search approach different from the search approach of the accelerator card 105. For example, the accelerator card 105 may use SA, and the accelerator card 105a may use tabu search. Furthermore, the node 100 may include three or more accelerator cards.

By providing one node with two or more accelerator cards, the functions of two or more search units may be achieved in the node. In this case, one node can be in charge of two or more subproblems.

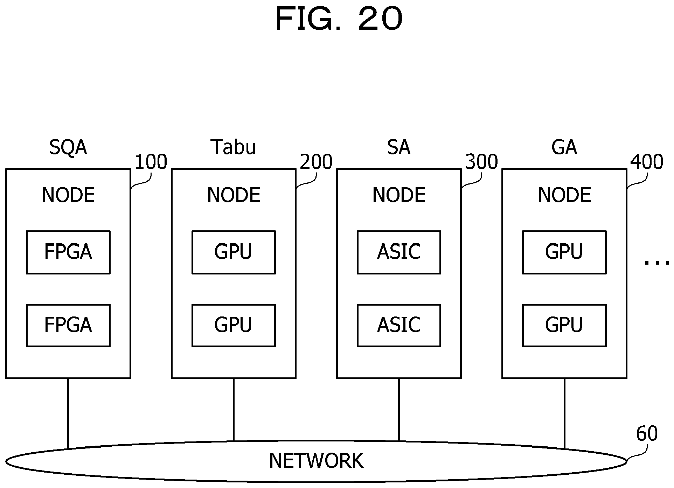

FIG. 20 is a diagram illustrating an example of an information processing system that uses a plurality of search approaches.

For example, a node 100 uses SQA. A node 200 uses tabu search. A node 300 uses SA. A node 400 uses GA. In this manner, the nodes 100, 200, 300, 400,... may use search approaches different from each other. Alternatively, at least two nodes may use the same search approach, such that at least two nodes use SA and the other nodes use SQA or tabu search among the nodes 100, 200, 300, 400,.... The nodes 100, 200, 300, 400,... may all use the same search approach.

As exemplified, the search approach may be different in units of nodes, or a plurality of accelerators that use a plurality of search approaches may be mixedly equipped in one node. The accelerator is achieved by an FPGA, GPU, ASIC, or the like, as described earlier. As exemplified in the second embodiment, at least two types of integrated circuits among an FPGA, GPU, ASIC, and the like may be mixedly equipped in one node.

In the information processing system 2, each of a plurality of nodes shares the best solution among a plurality of solutions obtained at each node with another node, and the value of each state variable in the state variable group to be fixed in the next search at each node is determined based on the shared solution. It is presumed that a still better solution is highly likely to exist in the vicinity of the better solution. Therefore, by sharing the good solution detected at each node with another node and determining the value of each state variable in the state variable group to be fixed on the basis of the shared solution, the search space may be narrowed down to the vicinity of the better solution, and a still better solution is more highly likely to be obtained.

Then, by expanding the assigned range of the state variable group that is not fixed in at least one node, the dependence on a state variable whose value is fixed is reduced, and the improvement of solution performance may be promoted. For example, the time to reach a solution with low energy may be shortened. Furthermore, a solution with lower energy is more highly likely to be obtained.

In addition, in the information processing system 2, each node can make a search asynchronously, and each node can also search for a solution using a different search approach. Therefore, it may be easy to add nodes for a relatively large-scale problem, and it is possible to achieve a system having excellent extensibility.

The information processing system 2 described above executes, for example, the following process. The following process can also be executed in the information processing system 1.

The information processing system 2 searches for a solution to a problem represented by an energy function containing a plurality of state variables. The information processing system 2 includes a plurality of nodes to which a plurality of subproblems generated by dividing the problem is separately assigned. The nodes 100, 200,... are an example of a plurality of nodes. The number of the plurality of nodes can take two or more.

Each of the plurality of nodes searches for a solution by updating the value of a state variable belonging to a state variable group assigned in correspondence with a subproblem assigned to the own node, which is the state variable group that includes partial state variables of the plurality of state variables. Each of the plurality of nodes holds a plurality of solutions found by the search. The solutions held in the solution buffer 130 are an example of a plurality of the solutions. The same applies to the solutions held in the solution buffer of each of the nodes 200,....

Each of the plurality of nodes transmits at least one solution among the plurality of solutions held by the own node to another node. Each of the plurality of nodes updates at least a part of the plurality of solutions held by the own node, in accordance with a solution update rule of the own node that preferentially keeps a solution with low energy, based on the solution received from another node.

Then, a part of a first state variable group assigned to a first node overlaps with at least a part of a second state variable group assigned to a second node.

This may reduce the dependence on the state variable whose value is fixed and promote the improvement of solution performance as compared with a case where each node is in charge of the state variable group without overlap.

Note that the process of updating at least a part of the plurality of solutions held by the second node based on the solution received from the first node corresponds to the process of causing the second node to update at least a part of the plurality of solutions held by the second node when the first node transmits the solution to the second node.

Furthermore, as exemplified in FIGS. 15 and 16, a portion of the first state variable group that does not overlap with the second state variable group may overlap with at least a part of a third state variable group assigned to a third node among the plurality of nodes from among the plurality of state variables.

This may reduce the dependence on the state variable whose value is fixed and promote the improvement of solution performance as compared with a case where each node is in charge of the state variable group without overlap. For example, in the division example 90 in FIG. 16, the division pattern #2 (the area B1) is an example of the first state variable group, the division pattern #4 (the area B2) is an example of the second state variable group, and the division pattern #6 (the areas C3 and D3) is an example of the third state variable group.

Alternatively, a part of a portion of the first state variable group that does not overlap with the second state variable group may overlap with at least a part of the third state variable group assigned to the third node among the plurality of nodes from among the plurality of state variables.

This may reduce the dependence on the state variable whose value is fixed and promote the improvement of solution performance as compared with a case where each node is in charge of the state variable group without overlap. For example, in the division example 90 in FIG. 16, the division pattern #1 (the area A1) is an example of the first state variable group, the division pattern #5 (the areas A3 and C3) is an example of the second state variable group, and the division pattern #4 (the area B2) is an example of the third state variable group.

Furthermore, as exemplified in FIG. 6, each of a plurality of portions of the state variable group corresponding to the subproblem assigned to each of the plurality of nodes may overlap with a part of another state variable group assigned to any another node among the plurality of nodes.

This allows the transition of any two state variables (any two-bit transition) to be performed without being affected by fixing of the value of the state variable.

Furthermore, the number of state variables belonging to the first state variable group may be different from the number of state variables belonging to the second state variable group.

This enables the allocation of the search load to respective nodes according to arithmetic resources of each node.

For example, the information processing system 2 may include the control unit 51. The control unit 51 may assign a state variable group that includes a number of state variables according to the memory size available for each of the plurality of nodes to search for a solution, to each of the plurality of nodes.

This allows the memory resources of each node to be efficiently exploited. For example, as a node has a larger memory size, a larger number of state variables may be put in the charge of the applicable node, and as a node has a smaller memory size, a smaller number of state variables may be put in the charge of the applicable node.

Moreover, the control unit 51 may assign a plurality of subproblems to the plurality of nodes. For example, the control unit 51 may perform a process of overlapping a part of the first state variable group assigned to the first node with at least a part of the second state variable group assigned to the second node. Furthermore, when a search for a solution by each of the plurality of nodes and transmission and reception of solutions between the nodes are repeatedly performed for a particular period of time, the control unit 51 may acquire at least one solution from among the plurality of solutions held by each of the plurality of nodes and output the acquired solution.

This makes it possible to appropriately acquire the final solution obtained by using the plurality of nodes. As described earlier, the control unit 51 acquires at least one solution held by each of the plurality of nodes in the solution buffer and outputs the acquired solution. For example, the control unit 51 may preferentially output a solution with small energy. The control unit 51 may convert the acquired solutions into a format of the solution to the combinatorial optimization problem, for example, to display the contents of the converted solution on a display connected to the control device 50 or to transmit the contents of the converted solution to a computer such as a client computer connected to the network 60.

Furthermore, although the example in which the function of the control unit 51 is provided in the control device 50 is illustrated, any one of the nodes 100, 200,... may have the function of the control unit 51. For example, the CPU of any of the nodes 100, 200,... may exert the function of the control unit 51 by executing the program stored in the RAM of the node.

Note that the information processing according to the first embodiment may be achieved by causing the processing unit 12 to execute the program. Furthermore, the information processing according to the second embodiment may be achieved by causing the CPU 101 to execute the program. The program can be recorded in the computer-readable recording medium 61.

For example, the program may be distributed by distributing the recording medium 61 in which the program is recorded. Alternatively, the program may be stored in another computer and distributed by way of a network. For example, a computer may store (install) the program, which is recorded in the recording medium 61 or received from another computer, in a storage device such as the RAM 102 or the HDD 103, read the program from the storage device, and execute the program.

## Claims

1. An information processing system configured to search for solutions to a problem represented by an energy function that contains a plurality of state variables, the information processing system comprising:

a plurality of nodes to which a plurality of subproblems generated by dividing the problem is separately assigned, each of the plurality of nodes being configured to:

search for one of the solutions by updating a value of one of the state variables that belongs to a state variable group assigned in correspondence with one of the subproblems assigned to an own node, the state variable group being a group that includes partial state variables of the plurality of state variables;
hold a plurality of the solutions found by the search;
transmit at least one of the solutions among the plurality of the solutions held by the own node to another node;
receive another one of the solutions transmitted by the another node; and
update, based on the another one of the solutions received from the another node, at least a part of the plurality of the solutions held by the own node in accordance with a solution update rule of the own node, wherein
a part of a first state variable group overlaps with at least a part of a second state variable group, the first state variable group being a group assigned to a first node among the plurality of nodes from among the plurality of state variables, the second state variable group being a group assigned to a second node among the plurality of nodes from among the plurality of state variables.

2. The information processing system according to claim 1, wherein
a portion of the first state variable group that does not overlap with the second state variable group overlaps with at least a part of a third state variable group assigned to a third node among the plurality of nodes from among the plurality of state variables.

3. The information processing system according to claim 1, wherein
a part of a portion of the first state variable group that does not overlap with the second state variable group overlaps with at least a part of a third state variable group assigned to a third node among the plurality of nodes from among the plurality of state variables.

4. The information processing system according to claim 1, wherein each of a plurality of portions of the state variable group assigned to each of the plurality of nodes overlaps with a part of another state variable group assigned to any node that is the another node among the plurality of nodes.

5. The information processing system according to claim 1, wherein
a number of the state variables that belong to the first state variable group is different from a number of the state variables that belong to the second state variable group.

6. The information processing system according to claim 1, further comprising
a control unit that assigns the state variable group that includes a number of the state variables according to a memory size available for each of the plurality of nodes to search for the solutions, to each of the plurality of nodes.

7. The information processing system according to claim 1, further comprising
a control unit that assigns the plurality of subproblems to the plurality of nodes, and when the search for the solutions by each of the plurality of nodes and the transmission and the reception of the solutions between the nodes are repeatedly performed for a particular period of time, acquires at least one of the solutions among the plurality of the solutions held by each of the plurality of nodes to output the acquired one of the solutions.

8. A computer-implemented method of searching for solutions to a problem represented by an energy function that contains a plurality of state variables, the method comprising:

by each of a plurality of nodes to which a plurality of subproblems generated by dividing the problem is separately assigned,
searching for one of the solutions by updating a value of one of the state variables that belongs to a state variable group assigned in correspondence with one of the subproblems assigned to an own node, the state variable group being a group that includes partial state variables of the plurality of state variables;
holding a plurality of the solutions found by the search;
transmitting at least one of the solutions among the plurality of the solutions held by the own node to another node;
receiving another one of the solutions transmitted by the another node; and
updating, based on the another one of the solutions received from the another node, at least a part of the plurality of the solutions held by the own node in accordance with a solution update rule of the own node, wherein

a part of a first state variable group overlaps with at least a part of a second state variable group, the first state variable group being a group assigned to a first node among the plurality of nodes from among the plurality of state variables, the second state variable group being a group assigned to a second node among the plurality of nodes from among the plurality of state variables.

9. A program of searching for solutions to a problem represented by an energy function that contains a plurality of state variables, the program comprising instructions which, when the program is executed by each of a plurality of nodes to which a plurality of subproblems generated by dividing the problem is separately assigned, cause each of the plurality of nodes to perform processing, the processing comprising:

searching for one of the solutions by updating a value of one of the state variables that belongs to a state variable group assigned in correspondence with one of the subproblems assigned to an own node, the state variable group being a group that includes partial state variables of the plurality of state variables;
holding a plurality of the solutions found by the search;
transmitting at least one of the solutions among the plurality of the solutions held by the own node to another node;
receiving another one of the solutions transmitted by the another node; and
updating, based on the another one of the solutions received from the another node, at least a part of the plurality of the solutions held by the own node in accordance with a solution update rule of the own node, wherein
a part of a first state variable group overlaps with at least a part of a second state variable group, the first state variable group being a group assigned to a first node among the plurality of nodes from among the plurality of state variables, the second state variable group being a group assigned to a second node among the plurality of nodes from among the plurality of state variables.

# FIG. 1

# FIG. 2

# FIG. 3

# FIG. 4

CONTROL DEVICE  CONTROL UNIT ~51  50

NODE  100

DATA STORAGE UNIT  120

SEARCH UNIT  140

SEARCH CONTROL UNIT  160

COMMUNICATION UNIT  150

SOLUTION BUFFER  130

NODE  200

DATA STORAGE UNIT  220

SEARCH UNIT  240

SEARCH CONTROL UNIT  260

COMMUNICATION UNIT  250

SOLUTION BUFFER  230

EP 4 047 529 A1

# FIG. 5

70

$W_{K,K+1}$

$W_{3,K+1}$

$x_1$

$x_K$

$x_{K+1}$
$=1$

$x_2$

$x_3$

$x_N$
$=0$

FIXED BITS

# FIG. 6

80

DIVISION PATTERN #1

| A | B | C | D |

DIVISION PATTERN #2

| A | B | C | D |

DIVISION PATTERN #3

| A | B | C | D |

DIVISION PATTERN #4

| A | B | C | D |

DIVISION PATTERN #5

| A | B | C | D |

DIVISION PATTERN #6

| A | B | C | D |

# FIG. 7

81

| AREA | A | B | C | D |
|---|---|---|---|---|
| WEIGHT MATRIX | W_00 | W_01 | W_02 | W_03 |
| | W_10 | W_11 | W_12 | W_13 |
| | W_20 | W_21 | W_22 | W_23 |
| | W_30 | W_31 | W_32 | W_33 |

NODE 100

NODE 200

NODE 300 ...

| A | B | C | D | | A | B | C | D | | A | B | C | D | ... |

# FIG. 8

FIXED
PORTION

WHOLE STATE
VARIABLES

| A | B | C | D |

X0 | X1

100

NODE

130

SOLUTION BUFFER

| # | SOLUTION | | ENERGY |
|---|---|---|---|
| 0 | X0_0 | X1_0 | E0 |
| 1 | X0_1 | X1_1 | E1 |
| 2 | X0_2 | X1_2 | E2 |
| 3 | X0_3 | X1_3 | E3 |

# FIG. 9

```
           ( START OF OVERALL  )
           (  CONTROL OF SEARCH )
                     |
                     v
     ┌──────────────────────────────────┐
     │  SEARCH EXECUTION BY SEARCH UNIT  │ ～ S1
     └──────────────────────────────────┘
                     |
                     v
     ┌──────────────────────────────────┐
     │    SOLUTION UPDATE AFTER SEARCH   │ ～ S2
     └──────────────────────────────────┘
                     |
                     v
     ┌──────────────────────────────────┐
     │     SOLUTION TRANSMISSION TO      │ ～ S3
     │         ANOTHER NODE             │
     └──────────────────────────────────┘
                     |
                     v
     ┌──────────────────────────────────┐
     │  SOLUTION RECEPTION FROM ANOTHER  │ ～ S4
     │             NODE                  │
     └──────────────────────────────────┘
                     |
                     v        S5
     <  IS END CONDITION SATISFIED?  >─── NO ──┐
                     |                          |   S6
                    YES          S7             v
     ┌──────────────────────────────┐   ┌──────────────────────────┐
     │ OUTPUT SOLUTION IN SOLUTION   │   │ VARIABLE FIXING AT TIME OF│
     │          BUFFER               │   │          SEARCH          │
     └──────────────────────────────┘   └──────────────────────────┘
                     |
                     v
                 (  END  )
```

28

# FIG. 10

```
┌─────────────────────────┐
│   START OF SOLUTION      │
│  UPDATE AFTER SEARCH     │
└─────────────────────────┘
            │
            ▼
┌─────────────────────────────────────┐
│ ACQUIRE ASSIGNED AREA PART Sp OF     │ ～ S10
│ SOLUTION FROM SEARCH UNIT            │
└─────────────────────────────────────┘
            │
            ▼
┌─────────────────────────────────────┐
│ SOLUTION CANDIDATE GENERATION LOOP   │ ～ S11
│ i = 0; i < K; i++                    │
└─────────────────────────────────────┘
            │
            ▼
┌─────────────────────────────────────┐
│ ACQUIRE i-TH SOLUTION S(i) AND       │ ～ S12
│ ENERGY E(i) FROM SOLUTION BUFFER     │
└─────────────────────────────────────┘
            │
            ▼
┌─────────────────────────────────────┐
│ GENERATE SOLUTION CANDIDATE S'(i) IN │ ～ S13
│ WHICH APPLICABLE BITS ARE REPLACED   │
│ WITH ASSIGNED AREA PART Sp, FOR      │
│ SOLUTION S(i)                        │
└─────────────────────────────────────┘
            │
            ▼
┌─────────────────────────────────────┐
│ CALCULATE ENERGY E'(i) OF SOLUTION   │ ～ S14
│ CANDIDATE S'(i)                      │
└─────────────────────────────────────┘
            │
            ▼
┌─────────────────────────────────────┐
│ SOLUTION CANDIDATE GENERATION LOOP   │ ～ S15
└─────────────────────────────────────┘
            │
            ▼
┌─────────────────────────────────────┐
│ COMPARE 2K ENERGIES E(i) AND E'(i)   │ ～ S16
│ OF ORIGINAL SOLUTION S(i) IN         │
│ SOLUTION BUFFER AND GENERATED        │
│ SOLUTION CANDIDATE S'(i) IN TOTAL    │
│ AND SELECT K LOWEST-ENERGY SOLUTIONS │
└─────────────────────────────────────┘
            │
            ▼
┌─────────────────────────────────────┐
│ REPLACE SOLUTION IN SOLUTION BUFFER  │ ～ S17
│ WITH K SELECTED SOLUTIONS            │
└─────────────────────────────────────┘
            │
            ▼
      ┌──────────┐
      │   END    │
      └──────────┘
```

# FIG. 11

```
        ┌─────────────────────────────────────┐
        │   START OF SOLUTION TRANSMISSION     │
        │          TO ANOTHER NODE             │
        └─────────────────────────────────────┘
                          │
                          ▼
    ┌──────────────────────────────────────────────┐
    │  ACQUIRE TOP k SOLUTIONS FROM SOLUTION BUFFER │──~ S20
    └──────────────────────────────────────────────┘
                          │
                          ▼
    ┌──────────────────────────────────────────────┐
    │  TRANSMIT SELECTED k SOLUTIONS AND ENERGIES   │──~ S21
    │  TO ANOTHER NODE VIA COMMUNICATION UNIT       │
    └──────────────────────────────────────────────┘
                          │
                          ▼
                   ┌─────────────┐
                   │     END     │
                   └─────────────┘
```

# FIG. 12

```
        ┌─────────────────────────────┐
        │  START OF SOLUTION RECEPTION │
        │      FROM ANOTHER NODE       │
        └─────────────────────────────┘
                      │
                      ▼                    S30
        ┌─────────────────────────────┐
        │ RECEIVE SOLUTION Sr AND ENERGY Er FROM │
        │          ANOTHER NODE        │
        └─────────────────────────────┘
                      │
                      ▼                    S31
        ┌─────────────────────────────┐
        │ ACQUIRE ENERGY Ew OF Worst SOLUTION Sw IN │
        │         SOLUTION BUFFER      │
        └─────────────────────────────┘
                      │
                      ▼                    S32        NO
        ◁─────────── Er ≤ Ew ───────────▷────────┐
                      │ YES               S33     │
                      ▼                            │
        ┌─────────────────────────────┐           │
        │ REPLACE Worst SOLUTION Sw IN SOLUTION BUFFER │
        │        WITH SOLUTION Sr      │           │
        └─────────────────────────────┘           │
                      │                            │
                      ▼◄───────────────────────────┘
              ┌───────────────┐
              │      END      │
              └───────────────┘
```

# FIG. 13

```
        ╭─────────────────────────────╮
        │  START OF VARIABLE FIXING   │
        │      AT TIME OF SEARCH      │
        ╰─────────────────────────────╯
                      │
                      ▼
   ┌─────────────────────────────────────────┐
   │ RANDOMLY SELECT ONE SOLUTION Ss FROM AMONG │  S40
   │    TOP k SOLUTIONS IN SOLUTION BUFFER      │
   └─────────────────────────────────────────┘
                      │
                      ▼
   ┌─────────────────────────────────────────┐
   │  CALCULATE BIAS SUCH THAT VARIABLE PORTION │  S41
   │ ASSIGNED TO ANOTHER NODE IS FIXED WITH VALUE │
   │         OF SELECTED SOLUTION Ss            │
   └─────────────────────────────────────────┘
                      │
                      ▼
   ┌─────────────────────────────────────────┐
   │ INPUT SELECTED SOLUTION Ss AND BIAS TO SEARCH │  S42
   │    UNIT AND START EXECUTING SEARCH         │
   └─────────────────────────────────────────┘
                      │
                      ▼
               ╭───────────╮
               │    END    │
               ╰───────────╯
```

# FIG. 14

```
        ┌─────────────────────────┐
        │   START OF SOLUTION      │
        │  UPDATE AFTER SEARCH     │
        └─────────────────────────┘
                     │
                     ▼
┌──────────────────────────────────────────┐
│ HOLD SOLUTION Sf USED FOR VARIABLE FIXING │
│ FOR OTHER THAN OWN-NODE VARIABLES AT TIME │   S50
│      OF SEARCH AND ENERGY Ef              │
└──────────────────────────────────────────┘
                     │
                     ▼
┌──────────────────────────────────────────┐
│  ACQUIRE ASSIGNED AREA PART Sp OF         │
│     SOLUTION FROM SEARCH UNIT             │   S51
└──────────────────────────────────────────┘
                     │
                     ▼
┌──────────────────────────────────────────┐
│ GENERATE SOLUTION Sf' IN WHICH APPLICABLE │
│ BITS ARE REPLACED WITH ASSIGNED AREA PART │   S52
│ Sp, FOR SOLUTION Sf USED FOR VARIABLE     │
│ FIXING                                    │
└──────────────────────────────────────────┘
                     │
                     ▼
┌──────────────────────────────────────────┐
│    CALCULATE ENERGY Ef' OF SOLUTION Sf'   │   S53
└──────────────────────────────────────────┘
                     │
                     ▼
┌──────────────────────────────────────────┐
│  COMPARE ENERGIES Ef AND Ef' AND SELECT   │
│       SOLUTION OF SMALLER ONE             │   S54
└──────────────────────────────────────────┘
                     │
                     ▼
┌──────────────────────────────────────────┐
│ REPLACE Worst SOLUTION IN SOLUTION BUFFER │
│        WITH SELECTED SOLUTION             │   S55
└──────────────────────────────────────────┘
                     │
                     ▼
              ┌─────────────┐
              │     END     │
              └─────────────┘
```

# FIG. 15

EP 4 047 529 A1

# FIG. 16

90

| DIVISION PATTERN #1 | A1 | B1 | C1 |
|---|---|---|---|

| DIVISION PATTERN #2 | A1 | B1 | C1 |
|---|---|---|---|

| DIVISION PATTERN #3 | A1 | B1 | C1 |
|---|---|---|---|

| DIVISION PATTERN #4 | A2 | B2 | C2 | D2 |
|---|---|---|---|---|

| DIVISION PATTERN #5 | A3 | B3 | C3 | D3 | E3 |
|---|---|---|---|---|---|

| DIVISION PATTERN #6 | A3 | B3 | C3 | D3 | E3 |
|---|---|---|---|---|---|

## FIG. 17A

G1

## FIG. 17B

G2

# FIG. 18

TWO DIVISION
PATTERNS

THREE DIVISION
PATTERNS

# FIG. 19

# FIG. 20

Europäisches
Patentamt

European
Patent Office

Office européen
des brevets

# EUROPEAN SEARCH REPORT

Application Number

EP 21 20 5246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2020 004387 A (FUJITSU LTD) 9 January 2020 (2020-01-09) * abstract; figures 1-3,19-25 * * paragraph [0003] * * paragraph [0007] * * paragraph [0010] - paragraph [0011] * * paragraph [0024] - paragraph [0030] * * paragraph [0037] - paragraph [0041] * * paragraph [0047] * * paragraph [0054] - paragraph [0058] * * paragraph [0169] - paragraph [0177] * ----- | 1-9 | INV. G06N5/00 G06N7/00 |
| A | US 9 804 827 B2 (HITACHI LTD [JP]) 31 October 2017 (2017-10-31) * abstract; figures 14-19,24,25,28 * * (1-4-1) Basic Processing and Data Flow * * (1-4-2) Ground-State Search Control Processing * * (1-4-3) Sub-Problem Generation Processing * ----- | 1-9 | |
| A | HIDENORI GYOTEN ET AL: "Enhancing the solution quality of hardware ising-model solver via parallel tempering", COMPUTER-AIDED DESIGN, ACM, 2 PENN PLAZA, SUITE 701NEW YORKNY10121-0701USA, 5 November 2018 (2018-11-05), pages 1-8, XP058417743, DOI: 10.1145/3240765.3240806 ISBN: 978-1-4503-5950-4 * abstract; figures 2-5 * * 3 HARDWARE-ORIENTED OPTIMIZATIONS * * 4 ISING PROCESSOR WITH APPROXIMATE PARALLEL TEMPERING * ----- | 1-9 | TECHNICAL FIELDS SEARCHED (IPC) G06N |

The present search report has been drawn up for all claims

| Place of search | Date of completion of the search | Examiner |
|---|---|---|
| The Hague | 10 June 2022 | De Meyer, Arnaud |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

**EP 21 20 5246**

This annex lists the patent family members relating to the patent documents cited in the above-mentioned European search report.
The members are as contained in the European Patent Office EDP file on
The European Patent Office is in no way liable for these particulars which are merely given for the purpose of information.

**10-06-2022**

| Patent document cited in search report | | Publication date | Patent family member(s) | | Publication date |
|---|---|---|---|---|---|
| JP 2020004387 | A | 09-01-2020 | NONE | | |
| US 9804827 | B2 | 31-10-2017 | JP | 5865457 B1 | 17-02-2016 |
| | | | JP | 2016051350 A | 11-04-2016 |
| | | | US | 2016063391 A1 | 03-03-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020004387 A
- US 20160335568